# EUROPEAN PATENT SPECIFICATION

(11) **EP 3 413 304 B1**
(45) Date of publication and mention of the grant of the patent: **31.08.2022**
(21) Application number: 18173166.2
(22) Date of filing: 18.05.2018
(51) Int. Cl.: G10L 15/22, G10L 15/26, G10L 15/30

(54) **METHOD FOR OPERATING HOME APPLIANCE**
VERFAHREN ZUM BETRIEB EINES HAUSHALTSGERÄTS
PROCÉDÉ DE FONCTIONNEMENT D'UN APPAREIL MÉNAGER

(30) Priority: 19.05.2017 KR 20170062480
(43) Date of publication of application: 12.12.2018
(73) Proprietor: LG Electronics Inc., Seoul 07336 (KR)
(72) Inventor: KIM, Sunghak, 08592 Seoul (KR); KWON, Mingu, 08592 Seoul (KR); SHIN, Kyuyeol, 08592 Seoul (KR); OH, Jeongkyu, 08592 Seoul (KR); YIM, Taehyeong, 08592 Seoul (KR); HAN, Dongwoo, 08592 Seoul (KR)
(74) Representative: Vossius & Partner Patentanwälte Rechtsanwälte mbB

(56) References cited:
- EP-A1- 3 067 884
- EP-A2- 2 669 889
- WO-A1-2015/088141

## Description

This application claims the priority benefit of Korean Patent Application No. 10-2017-0062480, filed on May 19, 2017 in the Korean Intellectual Property Office.

The present invention relates to a method for operating a home appliance, which is capable of operating upon recognizing a natural-language voice command from a user according to claim 1

Air conditioners, washing machines, cleaners, and other home appliances used in a specific space, for example, at home or at an office, perform distinct functions and operations upon a user's manipulation.

For example, an air conditioner includes a compressor for compressing a refrigerant, a condenser for condensing the compressed refrigerant, an expansion valve for expanding the condensed refrigerant, and an evaporator for exchanging heat of the expanded refrigerant with indoor air. The air conditioner is used to heat or cool down an indoor space so as to adjust an indoor temperature.

In addition, a refrigerant stores foods, a washing machine washes laundry, a cleaner performs cleaning functions, and a cooking appliance is used to cook food.

To operate a home appliance, such as the air conditioner, a user needs to manipulate buttons provided in a main body of the home appliance or use a remote control device, such as a remote controller.

However, even when using a remote controller, the user needs to select and push a key of a desired function. Thus, if the user is in a dark indoor space, additional lighting is necessary for the user to see the remote controller and its keys.

Under this background, there are increasing efforts to study and investigate the way of controlling a home appliance based on voice recognition.

In Related Art 1 (Korean Patent Application Publication No. 10-1999-00069703), a remote controller for an air conditioner includes a voice input unit and a signal processing unit to generate and transmit a manipulation signal in response to voice recognition.

Related art 2 (Korean Patent Application Publication No. 10-2006-0015092) discloses: converting an input voice signal into a digital signal and a text; checking if a coinciding control command is stored in a database; if the coinciding control command is stored, controlling each device of an air conditioner; and, if the coinciding control command is not stored, extracting a keyword and controlling each device of the air conditioner in accordance with a control command associated with the keyword.

However, there are limitations in system resources that each apparatus, such as a remote controller and an air conditioner, is able to provide. In particular, in order to recognize a natural language, not just few simple words, a great amount of computation is required, which cannot be implemented by a module embedded in an individual apparatus.

Voice recognition techniques disclosed in Related art 1 and Related art 2 have limitations in recognizing and processing voice commands which are input in the form of various natural languages by users across the world.

Thus, there is a need of a method for recognizing a natural language, without a limitation of system resources of an individual apparatus, and for controlling a home appliance conveniently.

In addition, a voice recognition method which minimizes the probability of false recognition to occur in a procedure of recognizing and processing a user's voice command in order to minimize the user's discomfort is needed.

### [Related art documents]

### [Patent documents]

(Patent document 1) 1. Korean Patent Application Publication No. 10-1999-00069703 (Published on September 6, 1999)
(Patent document 2) 2. Korean Patent Application Publication No. 10-2006-0015092 (Published on February 18, 2006)

EP 2 669 889 A2 relates to an apparatus and a method for executing a voice command in an electronic device.

WO 2015/088141 A1 relates to smart home appliances, an operating method thereof, and a voice recognition system using the smart home appliances.

EP 3 067 884 A1 relates to apparatuses and methods of speech recognition based on a wake-up keyword.

An object of the present invention is to provide a voice recognition method for recognizing and processing a natural language efficiently.

Another object of the present invention is to provide a home appliance capable of being controlled by a user's voice command, via a method for operating the same.

According to an embodiment of the present invention, as a home appliance operates upon a voice input, a user does not need to manipulate a remote controller and therefore the user's convenience may improve.

In addition, according to an embodiment of the present invention, it is possible to recognize and process a natural language efficiently.

The present invention relates to a method for voice recognition to be used in a home appliance according to claim 1.

Preferably, the method further comprises storing the call word.

The method further comprises when the voice command is received within the preset period of time, performing a feedback operation in response to receipt of the voice command.

The method further comprises, the home appliance being an air conditioner, the performing of a feedback operation in response to receipt of the voice command comprises driving at least one vane.

The at least one vane performs at least one of an lifting operation, a moving operation, a rotating operation, or a swing operation.

Preferably, the method further comprises, when the voice command is not received within the preset period of time, switching to the wake-up signal standby mode.

Preferably, the method further comprises, when a control signal based on the voice command is received from the voice recognition server system, operating in response to the received control signal.

The method further comprises receiving a response signal based on the voice command from the voice recognition server system, and outputting an audible guidance message corresponding to the received response signal.

The method further comprises, when the voice signal does not comprise any voice data, requesting voice data from the voice recognition server system; and receiving the requested voice data from the voice recognition server system, wherein the audible guidance message is based on the received voice data.

Preferably, the method further comprises, when a control signal based on the voice command is received from the voice recognition server system, operating in response to the received control signal.

Meanwhile, any other various effects will be directly and implicitly described below in the description of the embodiment.

The embodiments will be described in detail with reference to the following drawings in which like reference numerals refer to like elements wherein:
FIG. 1 is a diagram schematically illustrating a smart home system including a voice recognition server system and a home appliance according to an embodiment of the present invention;
FIG. 2 is a diagram illustrating various examples of a home appliance;
FIG. 3A shows an example of a voice recognition server system helpful in understanding the present invention;
FIG. 3B shows an example of a voice recognition server system helpful in understanding the present invention;
FIGS. 4 to 6 are diagrams illustrating an example of a signal flow in a voice recognition server system helpful in understanding the present invention;
FIGS. 7 to 9 are diagrams illustrating an example of a signal flow in a voice recognition server system helpful in understanding the present invention;
FIG. 10 is a block diagram illustrating an example of a server helpful in understanding the present invention;
FIG. 11 is a block diagram illustrating an example of a home appliance according to an embodiment of the present invention;
FIG. 12 is a block diagram illustrating an example of an air conditioner according to an embodiment of the present invention;
FIGS. 13 and 14 are views schematically showing an exterior appearance of an air conditioner according to an embodiment of the present invention;
FIG. 15 is a flowchart illustrating a method for operating a home appliance according to an embodiment of the present invention;
FIG. 16 is a flowchart illustrating a smart home system including a voice recognition server system and a home appliance according to an embodiment of the present invention;
FIGS. 17 and 18 are diagrams for explaining information that is provided by a home appliance in a voice recognition and control process according to an embodiment of the present invention;
FIG. 19 is a diagram illustrating feedback operations performed when a home appliance is implemented as a home appliance, according to an embodiment of the present invention;
FIG. 20 is a flowchart illustrating a method for operating a home appliance according to an embodiment in which only a command is transmitted to a voice recognition server system;
FIGS. 21A and 21B are diagrams for explaining false recognition that possibly occurs in a voice recognition process according to the operating method shown in FIG. 20;
FIG. 22 is a flowchart illustrating a method for operating a home appliance according to an embodiment of the present invention;
FIG. 23 is a flowchart illustrating a method for operating a voice recognition server system helpful in understanding the present invention;
FIG. 24 is a flowchart illustrating a method for operating a voice recognition server system helpful in understanding the present invention;
FIG. 25 is a diagram illustrating a signal flow in a home appliance and a voice recognition server system according to an embodiment of the present invention;
FIGS. 26 to 28 are diagrams for explaining various operations of a voice recognition server system and a home appliance helpful in understanding the present invention;
FIG. 29 is a block diagram illustrating another example of a home appliance according to an embodiment of the present invention;
FIG. 30 is a block diagram illustrating an example of a driving unit shown in FIG. 11 and 29;
FIG. 31 shows an example of a circuit diagram of a motor driving device shown in FIG. 29; and
FIG. 32 is a block diagram illustrating an inverter controller shown in FIG. 31.

Hereinafter, embodiments of the present invention will be described in detail with reference to the accompanying drawings. While the invention will be described in conjunction with exemplary embodiments, it will be understood that the present description is not intended to limit the invention to the exemplary embodiments.

In the drawings, in order to clearly and briefly describe the invention, parts which are not related to the description will be omitted and, like reference numerals refer to like elements throughout. Subject-matter relating to a voice recognition server system per se does not form part of the invention and is disclosed only to help understanding the method for voice recognition in a home appliance as claimed by claim 1.

In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other.

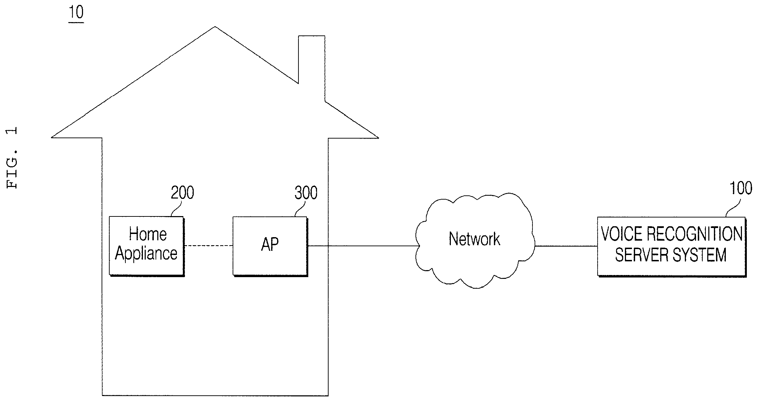

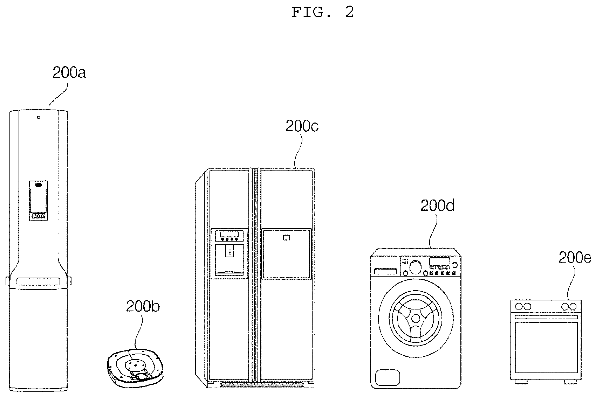

FIG. 1 is a diagram schematically illustrating a smart home system including a voice recognition system and a home appliance according to an embodiment of the present invention, and FIG. 2 is a diagram illustrating examples of a home appliance.

Referring to FIG. 1, a smart home system 10 according to an embodiment of the present invention may be composed of a home appliance 200, which includes: a communication module (not shown) to communicate with another device or access a network; and a voice recognition server system 100, which includes a plurality of server for voice recognition and control of home appliances.

Referring to 2, the home appliance 200 may be an air conditioner 200a, a robot cleaner 200b, a refrigerator 200c, a washing machine 200d, a cooking appliance 200e, etc.

In addition, the smart home system 10 according to an embodiment of the present invention may include a mobile terminal (not shown), such as a smart phone and a tablet PC.

The home appliance includes a communication module inside to communicate with electronic devices inside/outside the smart home system 10.

The smart home system 10 according to an embodiment of the present invention may further include an access point (AP) device 300, and the home appliance 200 may access a wireless internet network via the access point device 300 to communicate with other devices.

The AP device 300 may allocate a wireless channel to electronic devices located in the smart phone system 10 according to a specific communication scheme, and perform wireless data communication via the corresponding channel.

The specific communication scheme may be a Wi-Fi communication scheme. In response, a communication module included in the home appliance 200 may be a Wi-Fi communication module, but aspects of the present invention are not limited thereto.

Alternatively, the home appliance 200 may include a different type of communication module or a plurality of communication modules. For example, the home appliance 200 may include a near field communication (NFC) module, a zigbee communication module, a bluetooth communication module, etc.

The home appliance 200 may be connected, e.g. using a Wi-Fi communication module, to a server included in the voice recognition server system, an external server, or a user's mobile terminal, and may support smart functions such as remote monitoring and remote controlling.

Using the mobile terminal, the user may check information about the home appliance in the smart home system 10 or may control the home appliance 200.

Meanwhile, even when wishing to control the home appliance 200 or check specific information at home, the user needs to use the mobile terminal and this may be inconvenient.

For example, if the user does not know where the mobile terminal is now or if the mobile terminal is in a difference place, it is more efficient to have another means for controlling the home appliance 200 in a different way.

The home appliance 200 according to an embodiment of the present invention may receive a user's voice input, and the voice recognition server system 100 may recognize and analyze the user's voice input to control the home appliance 200.

Accordingly, the user is able to control the home appliance 200 even without manipulating a mobile terminal, a remote control device, or the like.

Meanwhile, at least some of servers included in the voice recognition server system 100 may be a server operated by a manufacturing or selling company of corresponding home appliance or a server operated by a firm commissioned from the manufacturing or selling company.

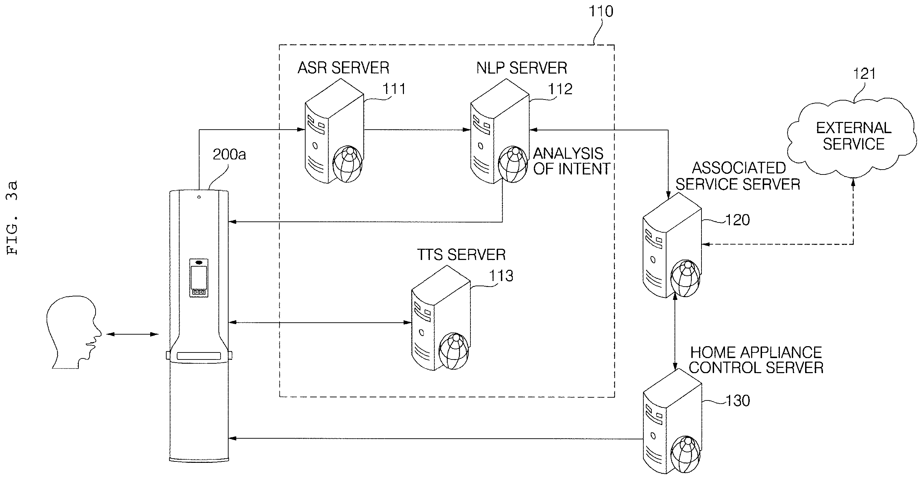

FIG. 3A shows an example of a voice recognition server system according to an embodiment of the present invention.

Referring to FIG. 3A, a voice recognition server system helpful in understanding the present invention may include a voice server 110, which is configured to receive voice data from the home appliance 200a and determine a voice command by analyzing the received voice data.

The voice server 110 may receive voice data from the home appliance 200a, convert the received voice data into text data, and analyze the text data so as to determine a voice command.

In addition, the voice server 110 may transmit a signal corresponding to the determined voice command to a specific server.

For example, the voice recognition server system according to an embodiment of the present invention may include a home appliance control server 130. The home appliance control server 130 may receive a signal corresponding to the determined voice command from the voice server 110, and transmit a control signal, which is based on a request signal from an association service server 120 generating a request signal corresponding to the determined voice command, to the home appliance signal 200a.

The home appliance 200a may receive a voice command input spoken by a user, and transmit voice data based on the received voice command input to the voice server 110.

The voice server 110 may include: an Automatic Voice recognition (ASR) server 111 configured to receive voice data from the home appliance 200a and convert the received voice data into text data; a Natural Language Processing (NLP) server 112 configured to receive the text data from the ASR server 111, determine a voice command by analyzing the received text data, and transmit a response signal based on the determined voice command to the home appliance 200a; and a Text to Speech (TTS) server 113 configured to receive a signal including a text corresponding to the response signal from the home appliance 200a, convert the text included in the received signal into voice data, and transmit the voice data to the home appliance 200a.

The NSR server 111 may generate text data by performing voice recognition on voice data received from the home appliance 200a, and transmit the text data to the NLP server 112.

The NLP server 122 may determine a voice command by analyzing the text data received from the ASR server 111 according to a natural language processing algorithm.

The NSP server 112 may process natural language, commonly used by humans, according to the natural language processing algorithm and analyze a user's intent. The NLP server 112 may determine a voice command coinciding with the user's intent, by performing natural language processing on text data received from the ASN server 111.

Accordingly, even though a user inputs a voice command with a commonly used language, the NLP server 112 may determine a voice command that coincides with the user's intent.

The NLP server 112 may transmit a signal corresponding to a result of natural language processing, that is, a signal corresponding to the determined voice command, to the associated service server 120.

The associated service server 120 may receive the signal corresponding to the determined voice command from the NLP server 112.

When the determined voice command is about the home appliance 200a, the Associated service server 120 may perform an operation corresponding to the determined voice command by communicating with the home appliance control server 130.

Alternatively, when the determined voice command is not about the home appliance 200a, the associated service server 120 may perform an operation corresponding to the determined voice command by communicating with the external service 121.

For example, when the determined voice command is a command for requesting information on weather, stock, news, or the like, the associated service server 120 may request the requested corresponding information from a server which provides services corresponding to the requested information, and receive the requested information from the server.

In addition, the associated service server 120 may transmit the received information to the voice server 110, and the NLP server 112 may transmit received information to the home appliance 200a.

When the determined voice command is about the home appliance 200a, the associated service server 120 may generate a request signal corresponding to the determined voice command and transmit the request signal to the home appliance control server 130.

The home appliance control server 130 may transmit a control signal, which is based on the request signal received from the associated service server 120, to the home appliance 200a.

For example, when a request for changing temperature set in the air conditioner 200a is received, the home appliance control server 130 may transmit a control signal for changing the set temperature to the air conditioner 200a.

Meanwhile, the home appliance 200a may perform a corresponding operation in accordance with the control signal received from the home appliance control server 130.

In addition, after performing a requested operation, the home appliance 200a may transmit a signal indicative of completion of the requested operation to the home appliance control server 130.

In addition, the home appliance control server 130 may receive a response signal from the home appliance 200a in response to the control signal, and transmit processing result information corresponding to the response signal to the associated service server 120.

The voice server 110 may transmit the response signal, including the processing result information, to the home appliance 200a.

The voice server 110 may receive a signal, including an output text corresponding to the processing result information, from the home appliance 200a, convert the received output text into voice data, and transmit the voice data to the home appliance 200a.

In this case, the response signal transmitted by the NLP server 112 to the home appliance 200a based on the determined voice command may include the processing result information.

Meanwhile, the home appliance 200a may receive a response signal, which is based on the determined voice command, from the NLP server 112. The response signal may include text data corresponding to the determined voice command.

For example, a user inputs a voice command for changing temperature set in an air conditioner, the response signal may include text data indicating that the set temperature has been changed.

Meanwhile, the home appliance 200a may transmit a signal including a text corresponding to the received response signal to the TTS server 113. The signal including a text corresponding to the response signal may include an output text corresponding to the processing result information.

Meanwhile, the TTs server 113 may convert the text included in the received signal into voice data, and transmit the voice data to the home appliance 200a. The voice data may include a source audio file.

The home appliance 200a may output, through a speaker, an audible guidance message which is based on the received voice data.

Meanwhile, the associated service server 120 may request state information of the home appliance 200a from the home appliance control server 130 based on a signal corresponding to the determined voice command. The home appliance control server 130 may transmit the state information of the home appliance 200a to the associated service server 120. When the state information of the home appliance 200a is not secured, the home appliance control server 130 may request and receive the state information from the home appliance 200a.

Meanwhile, when the determined voice command is supported based on the state information of the home appliance 200a, the associated service server 120 may transmit a request signal corresponding to the determined voice command to the home appliance control server 130.

Alternatively, when the determined voice command is not supported based on the state information of the home appliance 200a, the associated service server 120 may transmit, to the NLP server, a signal for notifying that the determined voice command is about a function not supported in the current state.

Even in this case, the home appliance 200a may request and receive voice data from the TTS server 113, and output an audible guidance message for notifying that the determined voice command is a function not supported in the current state.

In some implementations, the voice server 110 may determine whether or not the determined voice command is supported. For example, the NSP server 112 having analyzed the intent of the user's voice command may determine whether or not the determined voice command is supported.

In this case, if the determined voice command includes an unsupported command, a response signal based on the determined voice command, the signal which is transmitted by the NLP server 112, may be a signal for notifying that the determined voice command is a function not supported by the home appliance 200a.

The voice server 110 according to an embodiment of the present invention, and the voice recognition server system 100 including the voice server 110 may connect and use servers which perform various functions of natural-language voice processing.

The home appliance 200 may perform operations from receiving and pre-processing of a voice command to transmitting the voice command to a server, and the voice server 100 may perform natural language processing operations such as conversion of a voice/text, analysis of an intent, identification of a command, etc.

As the voice server 110 performs natural-language processing, this may reduce the burden on a CPU of an embedded module and a memory in a home appliance.

Meanwhile, the associated service server 120 may perform an operation based on a user's voice command by communicating with an external service server or a home appliance control server 130.

Meanwhile, the home appliance 200a may receive voice data including an audio file from the voice server 110 and output an audible guidance message so as to provide an audible feedback in response to a user's voice input.

The home appliance 200a may receive a voice file via a streaming media, and playback or output an audible guidance message to a user. Accordingly, the home appliance 220a does not need to store diverse audio files.

Meanwhile, via the associated service server 120, it is possible to be associated with various external services without colliding with other servers. In addition, using the external service associated server, an intention analysis rate may be enhanced by reflecting external information during intent analysis.

The voice recognition server system 100 helpful in understanding the present invention may secure compatibility and connectivity using a plurality of servers. In addition, using the home appliance control server 130, a final control command may prevent a collision between a voice recognition process and a home appliance controlling process performed by the home appliance control server 130 through, e.g., Wi-Fi communication, and a collision between a home appliance controlling processing through, e.g., a mobile terminal and a home appliance controlling process upon a voice input through the home appliance 200a.

The voice recognition server system 100 helpful in understanding the present invention may reduce the problem that loads are focused on one specific server, through organic connection of servers. Each server performs a different function, and thus, when a problem occurs in a specific server, it is possible to address the problem by associating with a different server which performs the same function.

In addition, a plurality of servers may be updated independently from time to time, and it is advantageous in improving performance.

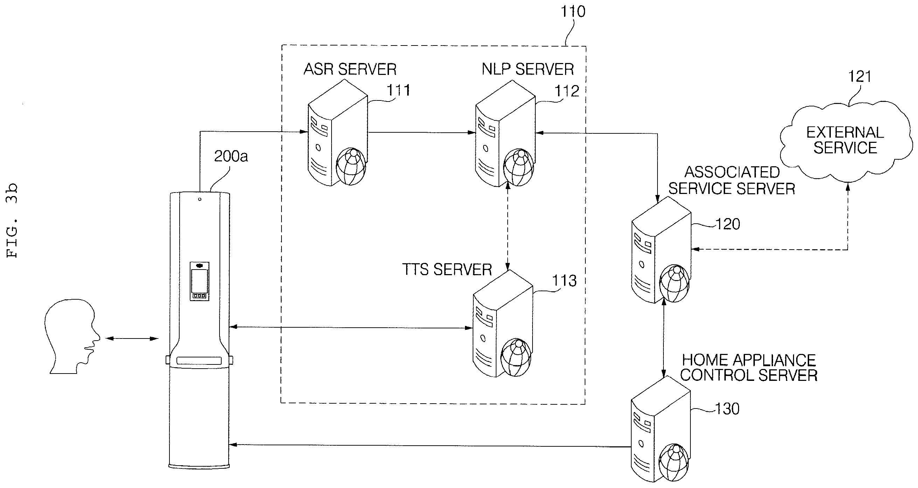

FIG. 3B shows an example of a voice recognition server system helpful in understanding the present invention.

The voice recognition server system shown in FIG. 3B is an example of the voice recognition server system shown in FIG.3A of which a process of transmitting voice data for outputting of an audible guidance message to the home appliance 200a has improved to reduce a voice control response time.

Thus, the voice recognition server systems shown in FIGS. 3A and 3B may perform other operations substantially in the same way, and the identical parts between the two systems will be briefly described.

Referring to FIG. 3B, a voice recognition server system helpful in understanding the present invention may include a voice server 110 configured to receive voice data from a home appliance 200a and analyze the received voice data to determine a voice command.

In addition, the voice recognition server system helpful in understanding the present invention may include: an associated service server 120 configured to a signal corresponding to the determined voice command from the voice server 110, and generate a request signal corresponding to the determined voice command; and a home appliance control server 130 configured to transmit, to the home appliance 200a, a control signal which is based on the request signal received from the associated service server 120.

The voice recognition server system shown in FIG. 3B is able to transmit voice data, including processing result information which is based on the voice command, to the home appliance 200a even without a request from the home appliance 200a.

The voice server 110 may include: an ASR server 111 configured to receive voice data from the home appliance 200a and convert the received voice data into text data; a NLP server 112 configured to receive the text data from the ASR server 111 and analyze the received text data to determine a voice command; and a TTS server 113 configured to convert a response signal based on the voice command into voice data and transit the voice data to the home appliance 200a.

In this embodiment, the home appliance control server 130 may receive a response signal from the home appliance 200a in response to the control signal, and transmit processing result information corresponding to the response signal to the associated service server 120.

The associated service server 120 may transmit the processing result information to the voice server 110, especially, the NLP server 112.

In this case, the voice data transmitted by the TTS server 113 to the home appliance 200a may include the processing result information.

In addition, the associated service server 120 may request state information of the home appliance 200a from the home appliance control server 130 based on a signal corresponding to the determined voice signal, and the home appliance control server 130 may transmit the state information of the home appliance 200a to the associated service server 120.

In addition, when the determined voice command is supportable based on the state information of the home appliance 200a, the associated service server 120 may transmit a request signal corresponding to the determined voice command to the home appliance control server 130.

Alternatively, when the determined voice command is not supported based on the state information of the home appliance 200a, the associated service server 120 may transmit, to the voice server 110, a signal for notifying that the determined voice command is a function not supported in the current state.

For example, the associated service server 120 may transmit, to the NLP server 112, a signal for notifying that the determined voice command is about a function not supported in the current state.

In addition, the NLP server 112 may transmit, to the TTS server 113, a signal for notifying that the determined voice command is about a function not supported in the current state, and the TTS server 113 may generate corresponding voice data and transmit the voice data to the home appliance 200a.

The home appliance 200a may receive the voice data from the TTS server 113, and output an audible guidance message for notifying that the determined voice command is about a function not supported in the current state.

In some implementations, the voice server 110 may determine whether or not the determined voice command is supported. For example, the NLP server 112 having analyzed an intent of a user's voice command may determine whether the determined voice command is supported.

In this case, if the determined voice command includes an unsupported command, a response signal based on the determined voice command, the signal which is transmitted by the NLP server 112, may be a signal for notifying that the determined voice command is a function not supported by the home appliance 200a.

If the home appliance 200a operates first and then requests audible guidance about a corresponding operation from the TTS server 113 in the last stage, there may be a time gap between performing of the corresponding operation and outputting of the audible guidance.

However, according to an embodiment of the present invention, at a time when an operation request is transmitted from the NLP server 112 after completion of intent analysis, information may be simultaneously provided to the TTS server 113.

In addition, around when the home appliance control server 130 transmits a control command to the home appliance 200a, the TTS server 113 may provide an audible comment to the home appliance 200a.

Accordingly, the audible comment may be output at the same time when or right after operation of the home appliance 200a.

According to this embodiment, by connecting the NLP server 112 and the TTS server 113 directly, it is possible to reduce an interval between outputting of a control command and outputting of the audible comment via the home appliance control server 130.

Meanwhile, although the home appliance 200a is depicted as an air conditioner with reference to FIGS. 3A and 3B as an example of the home appliance 200, aspects of the present invention are not limited to this. For example, the home appliance 200 may be a robot cleaner 200b, a refrigerator 200c, a washing machine 200d, a cooking appliance 200e, etc., in addition or as an alternative to the air conditioner 200a.

According to one aspect of the present invention, unlike the examples shown in FIGS. 3A and 3B, the NSR server 111, the NLP server 112, and the TTS server 113 for voice recognition and processing may be configured as one integrated server.

In addition, in some implementations, the associated service server 120 and the home appliance control server 130 may be configured as one integrated server.

According to the present invention, a home appliance operates upon a voice input, and thus, a user does not need to manipulate a remote control device, such as a remote controller, or a mobile terminal, thereby improving user convenience.

In addition, as described above with reference to FIGS. 3A and 3B, the present invention recognizes a user's natural-language voice command and performs a corresponding control operation, thereby enabled to recognize and process a natural language without a limitation to system resources of the home appliance and each server.

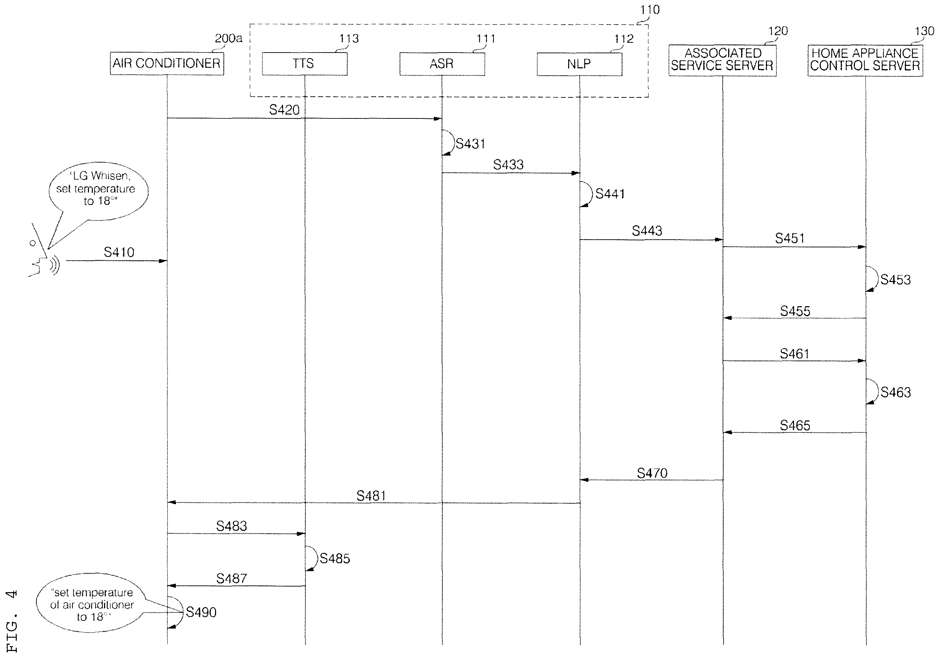

FIGS. 4 to 6 are diagrams illustrating a signal flow in a voice recognition server system helpful in understanding the present invention, the diagrams which shows a signal flow in the voice recognition server system shown in FIG. 3A.

FIG. 4 shows an example of a signal flow in a general situation in which a home appliance operates upon a user's voice command.

The home appliance 200 is exemplified by an air conditioner 200a in the following description, but aspects of the present invention are not limited thereto.

Referring to FIG. 4, the home appliance 200 according to an embodiment of the present invention, for example, the air conditioner 200a, may receive a user's voice command in S410, and transmit the received voice command to the voice server 110 in S420.

For example, when a command for changing temperature setting, for example, "LG Whisen, set the temperature to 18 degrees" is received, the air conditioner 200a may convert the received voice command into digital voice command in a specific format, such as a wave file, and transmit the digital voice data to the ASR server 111.

Meanwhile, after receiving a wake up signal including a call word, the air conditioner 200a may wait for a command and transmit an input voice command to the voice server 110.

Alternatively, the air conditioner 200a may receive successive voice inputs including a call word and a voice command. In this case, the air conditioner 200a recognize the call word and transmit the voice command to the voice server 110.

Signals transmitted and received via communication between devices in the system 10 may further include identification information of each of the devices and a session value for a task to be performed, as well as main data transmitted and received between the devices.

The ASR server 111 may recognize the received voice data and convert the voice data into text data in S431, and transmit the text data to the NLP server in S433.

The NLP server 112 may analyze and determine the intent of the user's voice command by performing natural language processing on the received text data in S441.

For example, from a voice "LG Whisen, set the temperature to 18 degrees", the NLP server 112 may determine a voice command intended to change temperature set in the air conditioner 200a to 18 degrees.

The NLP server 112 may transmit a signal corresponding to the determined voice command to the associated service server 120 in S443.

When the associated service server 120 request the current state information of the air conditioner 200a from the home appliance control server 130 in S451, the home appliance control server 130 may retrieve the current state information of the air conditioner 200a in S453 and transmit the current state information of the air conditioner 200a to the associated service server 120 in S455.

If the home appliance control server 130 does not have the current state information of the air conditioner 200a, the home appliance control server 130 may request and receive the current state information from the air conditioner 200a.

Meanwhile, according to the determined voice command, the associated service server 120 having received the state information may transmit, to the home appliance control server 130, a request signal for changing temperature set in the air conditioner 200a to 18 degrees in S461.

The home appliance control server 130 may control the air conditioner 200a by generating a control signal and transmitting the control signal to the air conditioner 200a based on the request signal in S463.

In addition, after controlling the air conditioner 200a, the home appliance control server 130 may receive a response signal from the home appliance 200 in response to the control signal, and transmits processing result information for notifying completion of a requested operation to the associated service server 120 in S465.

The associated service server 120 may transmit, to the NLP server 112, a signal corresponding to processing result information, for example, "Temperature of the air conditioner is set to 18 degrees" in S470. The NLP server 112 may transmit, to the home appliance 200a, a response signal based on the determined voice command in S481. The response signal based on the determined voice command may include the processing result information.

Meanwhile, the home appliance 200a may transmit a signal including a text (an output text) corresponding to the response signal in S483. When receiving the signal, the TTS server 113 may convert the text included in the received signal into voice data in S485, and transmit the voice data to the home appliance 200a in S487.

Based on the received voice data, the home appliance 200a may output an audible guidance message, such as "Temperature of the air conditioner is set to 18 degrees" in S490.

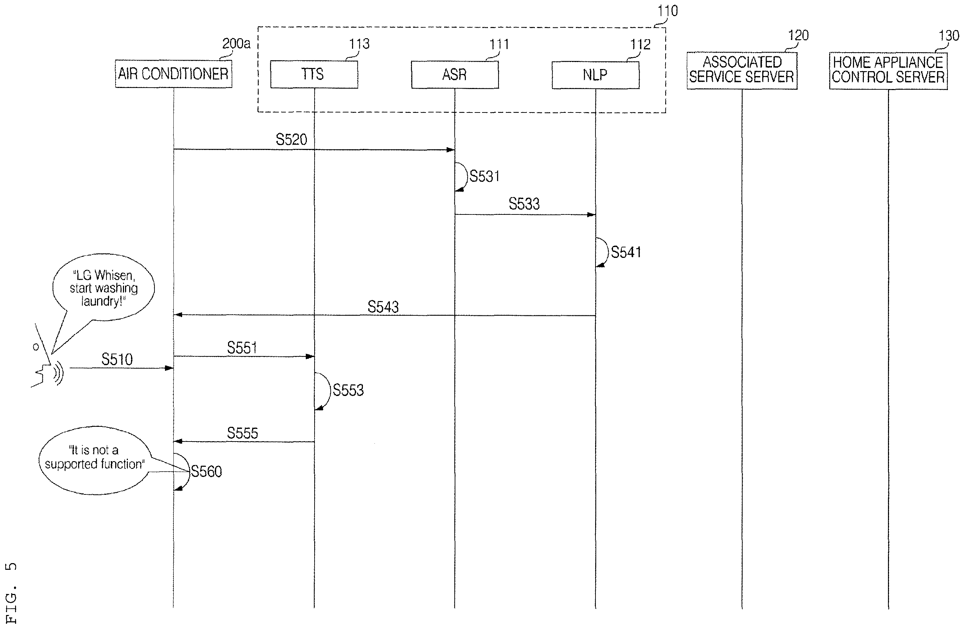

FIG. 5 shows a signal flow in the case where a function not supported by a corresponding home appliance is requested.

Referring to FIG. 5, the air conditioner 200a according to an embodiment of the present invention may receive a user's voice command, for example, "LG Whisen, start laundry", about a washing function not supported by the air conditioner 200a in S510.

The air conditioner 200a may transmit the received voice command to the voice server 110 in S520. The air conditioner 200a may convert the received voice command into digital voice data in a specific format, such as a wave file, and transmit the digital voice data to the ASR server 111.

The ASR server 111 may recognize the received voice data and convert the voice data into text data in S531, and transmit the text data to the NLP server 112 in S533.

The NLP server 112 may perform natural language processing on the received text data to analyze and determine the intent of the voice command in S541.

In addition, the NLP server 112 may determine whether or not the determined voice command is supported. In this embodiment, the NLP server 112 may determine that the user has requested a washing function that is not supported by the air conditioner.

Next, the NLP server 112 may transmit, to the air conditioner 200a, a response signal for notifying that the determined voice command is about a function not supported by the home appliance 200 in S543.

Meanwhile, the home appliance 200a may transmit a signal including a text (an output text) corresponding to the response signal in S551. When receiving the signal, the TTS server 113 may convert the text included in the received signal into voice data in S553 and transmit the voice data to the home appliance 200a in S555.

Based on the received voice data, the home appliance 200a may output an audible guidance message, such as "It is not a supported function", in S560.

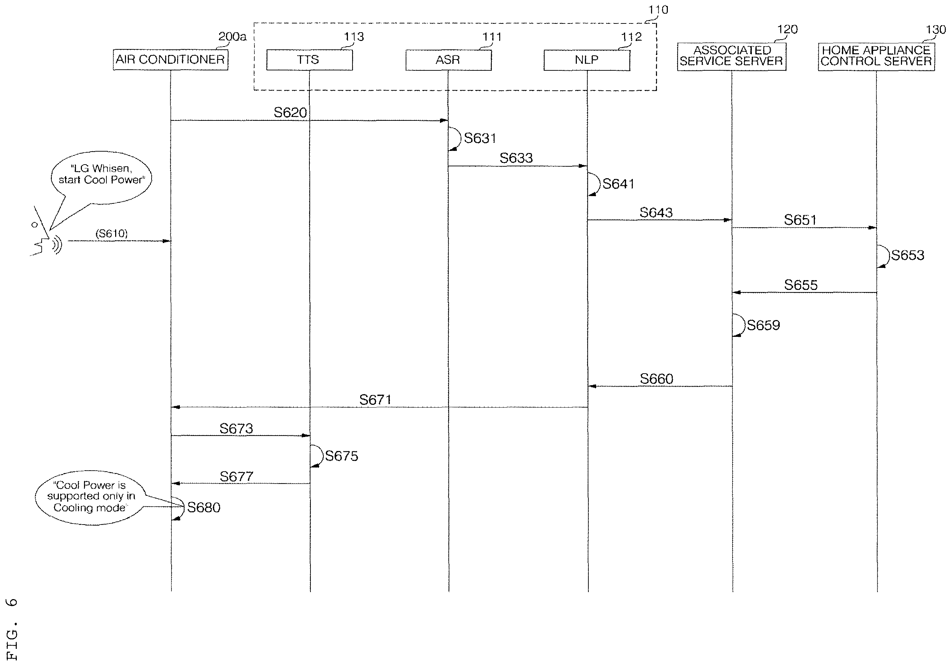

FIG. 6 shows a signal flow in the case where a request for a function not supported in the current operation mode of a corresponding home appliance is received.

Referring to FIG. 6, the air conditioner 200a according to an embodiment of the present invention may receive a user's voice command, for example, "LG Whisen, Start Cool power", indicating a specific mode operation of the air conditioner 200a in S610.

The air conditioner 200a may transmit the received voice command to the voice server 110 in S620. The air conditioner 200a may convert the received voice command into digital voice data in a specific format, such as a wave file, and transmit the digital voice data to the ASR server 111.

The ASR server 111 may recognize the received voice data and convert the voice data into text data in S631, and transmit the text data to the NLP server 112 in S633.

The NLP server 112 may analyze and determine the intent of the voice command by performing natural-language processing on the received text data in S641.

For example, from a voice "LG Whisen, start Cool Power", the NLP server 112 may determine a voice command intended to operate the air conditioner 200a in the Cool Power mode.

The NLP server 112 may transmit a signal corresponding to the determined voice command to the associated service server 120 in S643.

When the associated service server 120 requests current state information of the air conditioner 200a from the home appliance control server 130 in S651, the home appliance server 130 may retrieve the current state information of the air conditioner in S653 and transmit the current state information of the air conditioner 200a to the associated service server 120 in S655.

If the home appliance control server 130 does not have the current state information of the air conditioner 200a, the home appliance control server 130 may request and receive the current state information from the air conditioner 200a.

Meanwhile, the associated service server 120 having received the current state information may have determined, based on the current state information, whether the determined user command is supported in S657. For example, in the case where the air conditioner 200a is operating in a dehumidification mode and the Cool Power mode is supported only in a cooling mode, the NLP server 112 may determine that the user has requested the Cool Power mode not supported in the current state.

Next, the associated service server 120 may transmit, to the NLP server 112, a response signal for notifying that the determined voice command is about a function not supported by the home appliance 200a in the current state in S660.

In addition, the associated service server 120 may transmit, to the NLP server 112, a response signal for notifying that the determined voice command is about a function not supported by the home appliance 200a in the current state in S671.

Meanwhile, the home appliance 200a may transmit a signal including a text (an output text) corresponding to the response signal in S673. When receiving the signal, the TTS server 113 may convert the text included in the received signal into voice data in S675 and transmit the voice data to the home appliance 200a in S677.

Based on the received voice data, the home appliance 200a may output an audible guidance message, such as "Cool Power is supported only in a cooling mode", in S680.

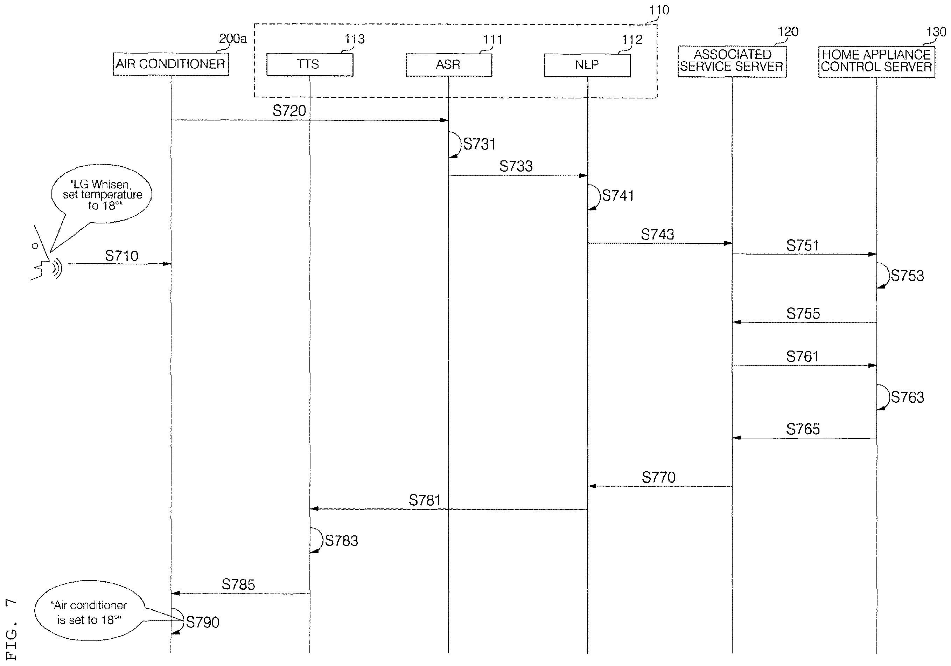

FIGS. 7 to 9 are diagrams illustrating an example of a signal flow in a voice recognition server system helpful in understanding the present invention, the diagrams which shows a signal flow in the voice recognition server system shown in FIG. 3B.

FIG. 7 shows a signal flow in a general situation in which a home appliance operates upon a user's voice command.

Referring to FIG. 7, the home appliance 200 according to an embodiment of the present invention, for example, the air conditioner 200a, may receive a user's voice command in S710, and transmit the received voice command to the voice server 110 in S720.

The ASR server 111 may recognize the received voice data and convert the voice data into text data in S731, and transmit the text data to the NLP server 112 in S733.

The NLP server 112 may analyze and determine the intent of the voice command by performing natural language processing on the received text data in S741.

For example, from a voice "LG Whisen, set the temperature to 18 degrees", the NLP server 112 may determine a voice command intended to change temperature set in the air conditioner 200a to 18 degrees.

The NLP server 112 may transmit a signal corresponding to the determined voice command to the associated service server 120 in S743.

When the associated service server 120 requests current state information of the air conditioner 200a from the home appliance control server 130 in S751, the home appliance control server 130 may retrieve the current state information of the air conditioner 200a in S753, and transmit the current state information of the air conditioner 200a to the associated service server 120 in S755.

If the home appliance control server does not have the current state information of the air conditioner 200a, the home appliance control server 130 may request and receive the current state information of the air conditioner 200a.

Meanwhile, according to the determined voice command, the associated service server 120 having received the current state information may transmit a request signal for changing temperature set in the air conditioner 200a to 18 degrees to the home appliance control server 130 in S761.

Based on the request signal, the home appliance control server 130 may control the air conditioner 200a by generating a control signal and transmitting the control signal to the air conditioner 200a in S763.

In addition, after controlling the air conditioner 200a, the home appliance control server 130 may receive a response signal from the air conditioner 200a in response to the control signal, and transmit processing result information for notifying completion of a requested operation to the associated service server 120 in S765.

The associated service server 120 may transmit a signal corresponding to the processing result information, for example, "Temperature of the air conditioner is set to 18 degrees", to the NLP server 112 in S770.

Meanwhile, the NLP server 112 may transmit a response signal based on the determined voice command to the TTS server 113 in S781. The response signal based on the determined voice command may include the processing result information.

Meanwhile, the TTS server 113 may convert the response signal based on the voice command into voice data in S783, and transmit the voice data to the home appliance 200a in S785.

Based on the received voice data, the home appliance 200a may output an audible guidance message, such as "Temperature of the air conditioner is set to 18 degrees", in S790.

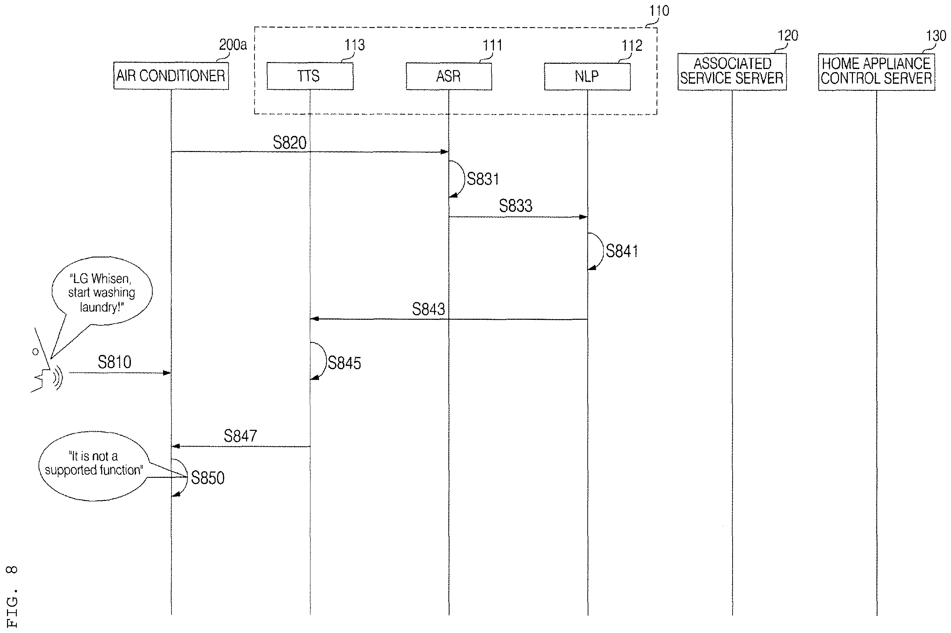

FIG. 8 shows an example of a signal flow in the case where a function not supported by a corresponding home appliance is requested.

Referring to FIG. 8, the air conditioner 200a according to an embodiment of the present invention may receive a user's voice command, for example, "LG Whisen, start washing laundry", about a washing function that is not supported by the air conditioner 200a in S810.

The air conditioner 200a may transmit the received voice command to the voice server 110 in S820. The air conditioner 200a may convert the received voice command into digital voice data in a specific format, such as a wave file, and transmit the digital voice data to the ASR server 111.

The ASR server 111 may recognize the received voice data into text data in S831, and transmit the text data to the NLP server 112 in S833.

The NLP server 112 may analyze and determine the intent of the voice command by performing natural language processing on the received text data in S841.

In addition, the NLP server 112 may determine whether or not the determined voice command is supported. In this embodiment, the NLP server 112 may determine that the user has requested a washing function not supported by the air conditioner 200a.

Next, the NLP server 112 may transmit, to the TTS server 113, a response signal for notifying that the determined voice command is about a function not supported by the air conditioner 200a in S843.

The TTS server 113 may convert the response signal based on the voice data in S845, and transmit the voice data to the air conditioner 200a in S847.

Based on the received voice data, the air conditioner 200a may output an audible guidance message, such as "It is not a supported function", in S850.

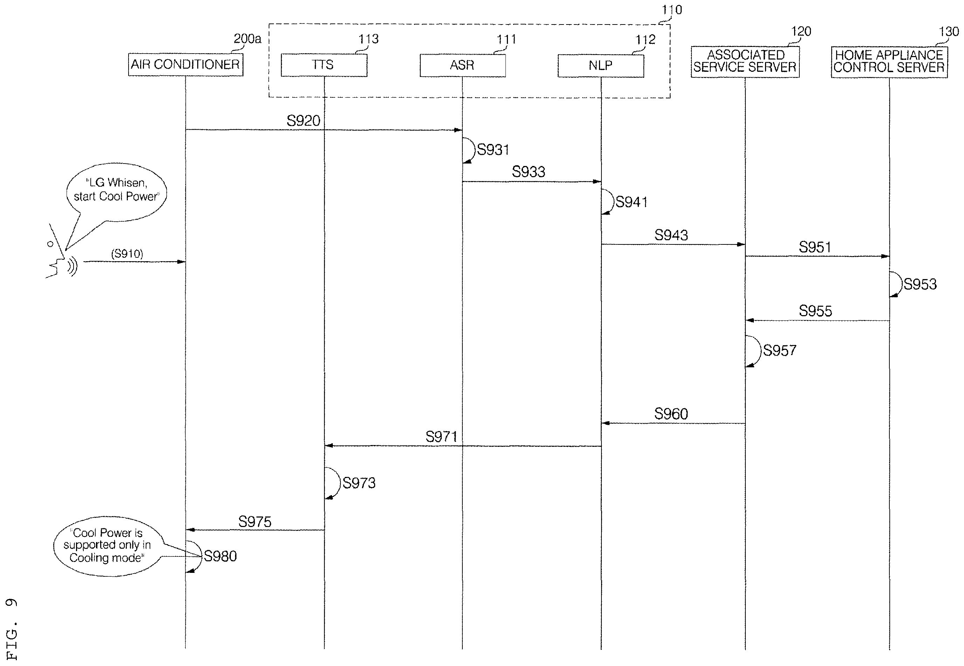

FIG. 9 shows an example of a signal flow in the case where a function not supported in the current operation mode of a corresponding home appliance is requested.

Referring to FIG. 9, the air conditioner 200a according to an embodiment of the present invention may receive a user's voice command, for example, "LG Whisen, start Cool Power", indicating a specific mode operation of the air conditioner 200a in S910.

The air conditioner 200a may transmit the received voice command to the voice server 110 in S920. The air conditioner 200a may convert the received voice command into digital voice data in a specific file, such as a wave file, and transmit the digital voice data to the ASR server 111.

The ASR serer 111 may recognize the received voice data and convert the voice data into text data in S931, and transmit the text data to the NLP server 112 in S933.

The NLP server 112 may analyze and determine the intent of the voice command by performing natural language processing on the received text data in S941.

For example, from a voice "LG Whisen, start to Cool Power", the NLP server 112 may determine a voice command intended to operate the air conditioner 200a in the Cool Power mode.

The NLP server 112 may transmit a signal corresponding to the determined voice command to the associated service server 120 in S943.

When the associated service server 120 requests current state information of the air conditioner 200a from the home appliance control serer 130 in S951, the home appliance control server 130 may retrieve the current state information of the air conditioner 200a in S953, and transmit the current state information of the air conditioner 200a to the associated service server 120 in S955.

If the home appliance control server 130 does not have the current state information of the air conditioner 200a, the home appliance control server 130 may request and receive the current state information from the air conditioner 200a.

Meanwhile, based on the received current state information of the air conditioner 200a, the associated service server 120 may determine whether the determined voice command is supported in S957. For example, in the case where the air conditioner 200 is operating in a dehumidification mode and the Cool Power mode is available only in a cooling mode, the NLP server 112 may determine that the user has requested the Cool Power mode not supported in the current state.

Next, the associated service server 120 may transmit, to the NLP server 112, a response signal for notifying that the determined voice command is a function not supported by the air conditioner 200a in the current state, in S960.

In addition, the NLP server 112 may transmit, to the TTS server 113, a response signal for notifying that the determined voice command is a function not supported in the current state in S971.

Meanwhile, the TTS server 113 may convert the response signal based on the voice command into voice data in S973, and transmit the voice data to the air conditioner 200a in S975.

Based on the received voice data, the air conditioner 200a may output an audible guidance message, such as "Cool Power is available only in a cooling mode" in S980.

According to the present invention, it is possible to implement user experience where appropriate audible comment is provided when a user's command is failed to be interpreted or the user's command is about an unavailable function.

By providing audible guidance in an appropriate time and situation during command processing, it is possible to minimize user inconvenience.

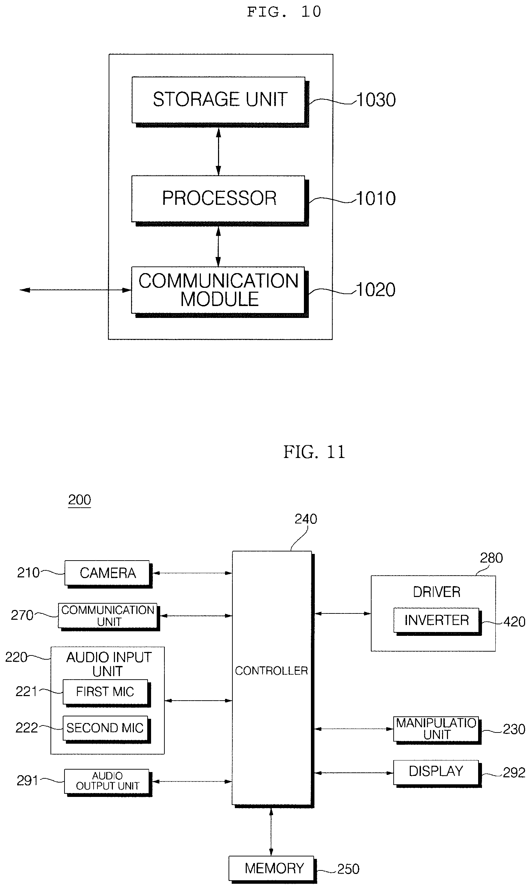

FIG. 10 is an internal block diagram of an example of a server helpful in understanding the present invention. The server may be the ASR server 111, the NLP server 112, the TTS server 113, the associated service server 120, or the home appliance control server 130.

Referring to FIG. 10, the server may include a communication module 1020, a storage unit 1030, and a processor 1010.

The processor 1010 may control overall operation of the server.

The communication module 1020 may diverse data, such as state information, operation information, manipulation information, voice data, and text data, from a home appliance, such as a mobile terminal and an air conditioner, or another server.

In addition, the communication module 1020 may transmit original or processed data corresponding to the received diverse information corresponding thereto to a home appliance, such as a mobile terminal and an air conditioner, or to a different server.

To this end, the communication module 1020 may include one or more communication modules, such as an Internet module, and a mobile communication module.

The storage unit 1030 may store received information, and have data required to generate result information corresponding to the received information.

The storage unit 1030 may store data required for operation of a corresponding server. For example, the storage unit 1030 may store an automatic voice recognition algorithm in the case of the ASR server 11, and may store a home appliance's product information, state information, and information for controlling the home appliance in the case of the home appliance control server 130.

Meanwhile, the server may be a server administered by a manufacturer of a home appliance, such as an air conditioner, or by a service provide, and the server may be a kind of Cloud server.

FIG. 11 is an interior block diagram illustrating an example of a home appliance according to an embodiment of the present invention.

Referring to FIG. 11 , the home appliance 200 according to an embodiment of the present invention may include: a camera 210; an audio input unit 220 configured to receive a user's voice command; a manipulation unit 230; a memory 250 configured to store diverse data; a communication unit 270 configured to perform wireless communication with another electronic device; a driving unit 280 configured to perform an operation of each home appliance; a display configured to display specific information in the form of an image; an audio output unit 291 configured to output specific information in the form of sound; and a controller 240 configured to control overall operations.

The audio input unit 220 may receive an external audio signal, such as a user's voice command. To this end, the audio input unit 220 may include one or more microphones (MIC). In addition, to more accurately receive a user's voice command, the audio input unit 220 may include a plurality of microphones 221 and 222. The plurality of microphones 221 and 222 may be spaced apart from each other and configured to acquire an external audio signal and process the external audio signal into an electric signal.

FIG. 11 shows the case where the audio input unit 220 includes two microphones, a first microphone 221 and a second microphone 222, but aspects of the present invention are not limited thereto.

The audio input unit 220 may include or be connected to a processor, which converts analog sound into digital data, so as to convert a user's voice command into data so that the controller 240 or a specific server is able to recognize the user's voice command.

Meanwhile, the audio input unit 220 may utilize various noise removal algorithms for removing noise that occurs in the process of receiving the user's voice command.

In addition, the audio input unit 220 may include components for audio signal processing: for example, a filter for removing noise from an audio signal received by each of the microphones 221 and 222, and an amplifier for amplifying a signal output from the filter and output the amplified signal.

The memory 250 may record diverse information necessary for operation of a home appliance, and include a volatile or nonvolatile recording medium. A recording medium may store micro processor-readable data, and may include a Hard Disk Drive (HDD), a Solid State Disk (SSD), a Silicon Disk Drive (SDD), a ROM, a RAM, a CD-ROM, a magnetic tape, a floppy disk, an optical data storage device, and the like.

In some implementations, the memory 250 may store an audio file of a user's voice command, and the stored audio file may be transmitted to the voice recognition server system 100 via the communication unit 270. In addition, the stored audio file may be deleted after a preset period of time passes or after a preset operation is performed.

Meanwhile, the memory 250 may store data for voice recognition, and the controller 240 may process a user's voice input signal received via the audio input unit 220, and perform a voice recognition process.

Alternatively, in some implementations, the home appliance 200 may further include a voice recognition module (not shown), and the voice recognition module may perform simple voice recognition, such as recognizing a call word.

In addition, the memory 250 may store a call word determination algorithm for determining whether a voice signal includes a call word.

Based on the call word determination algorithm, the controller 240 and the voice recognition module may determine whether or not the voice signal includes the call word.

Meanwhile, the simple voice recognition may be performed by the home appliance 200, and complicated voice recognition, such as processing a natural language, may be performed by the voice recognition server system 100.

For example, when a wake up voice signal including a preset call word is received, the home appliance 200 may be switched into a state for receiving a voice command. In this case, the home appliance 200 may perform voice recognition processes up to determination as to whether a call word voice is input, and other subsequent processes regarding the user's voice input may be performed by the voice recognition server system 100.

System resources of a home appliance are limited, and thus, complicated recognition and processing of a natural language recognition may be performed by the voice recognition server system 100.

Alternatively, whether a call word voice is input may be determined by both the home appliance 200 and the voice recognition server system 100. Accordingly, it is possible to reduce false recognition of a call word voice input and increase a recognition rate.

The memory 250 may store limited data. For example, the memory 250 may store data for recognizing a wake up voice signal including a preset call word. In this case, the controller 240 may recognize the wake-up voice signal including the preset call word from a user's voice input signal received via the audio input unit 220.

Meanwhile, a call word may be set by a manufacturer or a different call word may be set for each home appliance. For example, call words may be set to be "LG Whisen" for an air conditioner and "LG Dios" for a refrigerator.

In addition, a call word may be changed by a user.

The controller 240 may perform a control operation so as to transmit a user's voice command, which is input after recognition of a wake up voice signal, to the voice recognition server system 100 via the communication unit 270.

The communication unit 270 may include one or more communication modules and may transmit and receive various signals through wireless communication with another electronic device. For example, the communication unit 270 may communicate with electronic devices inside/outside a smart home system 10.

In addition, the communication unit 270 may communicate with the AP device 300, and access a wireless Internet network via the AP device 300 to communicate with other devices.

In addition, the controller 240 may transmit state information of the home appliance 200 and a user's voice command to the voice recognition server system 100 via the communication unit 270.

Meanwhile, when a control signal is received via the communication unit 270, the controller 240 may control the home appliance 200 to operate in accordance with the received control signal.

The display 292 may display information corresponding to a user's command input, a processing result corresponding to the user's command input, an operation mode, an operation state, and an error state in the form of an image.

In some implementations, the display 292 may form an inter-layered structure with a touch pad to implement a touch screen. In this case, the display 292 may be used as an input device through which information can be input upon a user's touch, as well as an output device.

In addition, under the control of the controller 240, the audio output unit 291 may output a warning sound, an operation state, a notification message indicative of an error state, information corresponding to a user's command input, and a processing result corresponding to the user's command input, and the like in the form of sound.

Meanwhile, the audio output unit 291 may convert an electric signal from the controller 240 into an audio signal, and output the audio signal. To this end, the audio output unit 291 may include a speaker.

In addition, the home appliance according to an embodiment of the present invention may provide User Experience (UX) by taking into consideration various situations which could occur during a voice recognition process and a home appliance control process.

The controller 240 may control the audio output unit 291 and the display 292 to provide specific information to a user using a visual/audible means in response to each step of the voice recognition process and the home appliance control process.

The controller 240 may control the display 292 to provide visual information in response to each step of the voice recognition process and the home appliance control process.

In addition, the controller 240 may control the audio output unit 291 to provide audible information in response to each step of the voice recognition process and the home appliance control process.

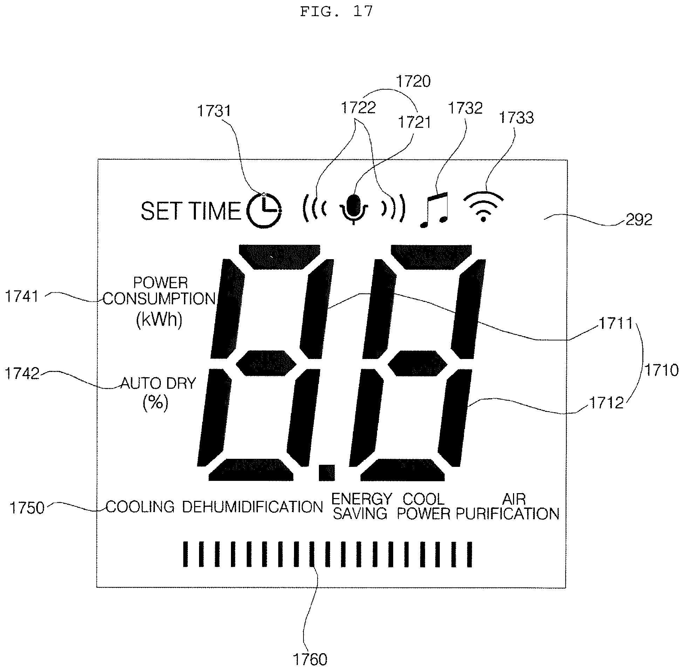

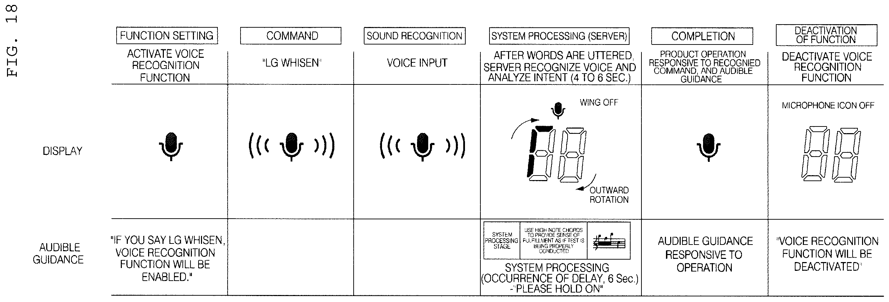

User Experience (UX) provided via the audio output unit 291 and the display 292 during the voice recognition process and the home appliance control process will be described in detail with reference to FIGS. 17 and 18.

The driving unit, also referred to as the driver, 280 performs operations of each home appliance, and thus, the driving unit 280 may have different configuration depending on a home appliance.

In one example in which the home appliance is a refrigerator, the driving unit 280 may include: a refrigerating compartment driving unit configured to operate a refrigerating compartment to supply cold air to a refrigerating compartment; a freezing compartment driving unit configured to operate a freezer fan to supply cold air to a freezing compartment; and a compressor driving unit configured to operate a compressor for compressing refrigerants.

In another example in which a home appliance is a washing machine, the driving unit 280 may include a driving unit for driving a drum or a tub.

In yet another example in which a home appliance is an air conditioner, the driving unit 280 may include: a compressor driving unit to drive a compressor in an exterior unit; an exterior-unit fan driver configured to operate a fan of an exterior unit for heat exchange; and an interior-unit fan driving unit configured to operate an interior unit fan for heat exchange.

In yet another example in which a home appliance is a cooking appliance, the driving unit may include a microwave driving unit configured to output a microwave toward the inside of a cavity.

In yet another example in which a home appliance is a cleaner, the driving unit 280 may include a fan motor driving unit to suction air.

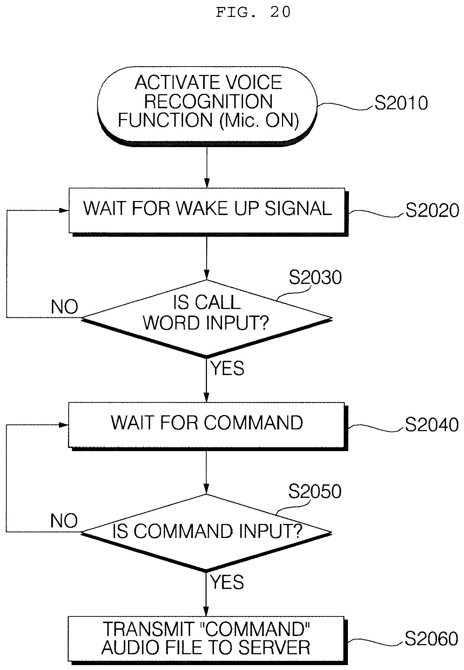

Meanwhile, the driving unit 280 may include a motor driving unit, and may include an inverter 420 and the like to drive a motor. The motor driving unit will be described in detail with reference to FIGS. 20 to 32.

Meanwhile, the home appliance 200 may further include a manipulation unit 230 for a user's input, and a camera 210 capable of capturing an image of an area within a specific range of the home appliance 200.

The manipulation unit 230 may include a plurality of manipulation buttons, and transmit a signal corresponding to a pushed button to the controller 240.

The camera 210 may capture an image of an ambient or surrounding environment of the home appliance 200, and a plurality of such cameras may be installed at at least one part of the home appliance 200 for photographing efficiency.

For example, the camera 210 may include at least one optical lens, an image sensor (e.g., a CMOS image sensor) configured with a plurality of photodiodes (e.g., pixels) on which an image is formed by lights passing through the optical lens, and a Digital Signal Processor (DSP) configured to form an image based on signals output from the photodiodes. The DSP may generate not just a still image, but also a video composed of frames which constitutes still images.

Meanwhile, an acquired image captured by the camera 210 may be stored in the memory 250.

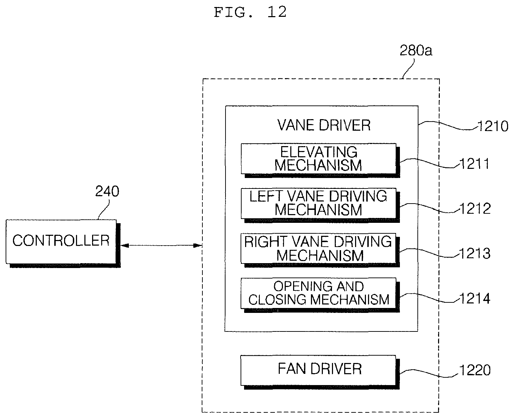

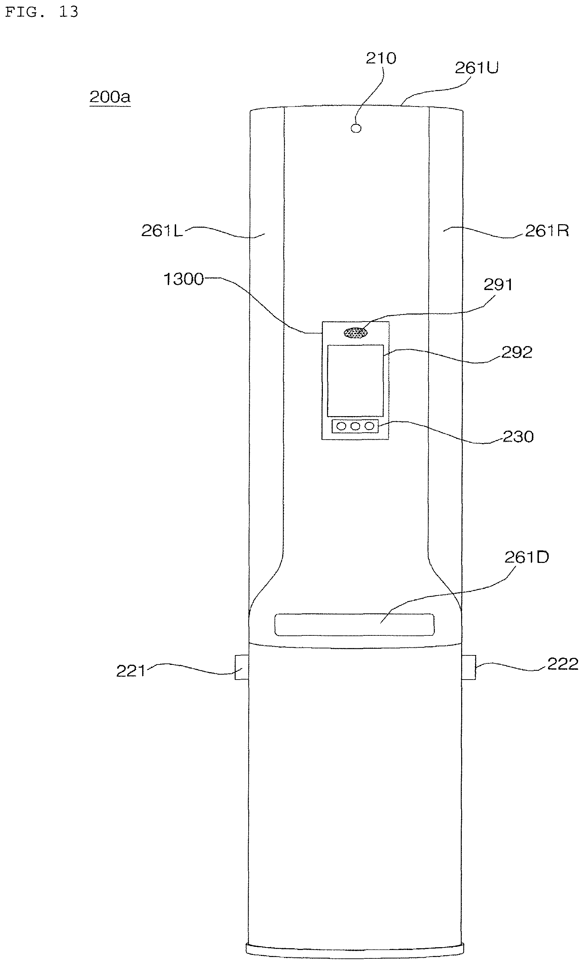

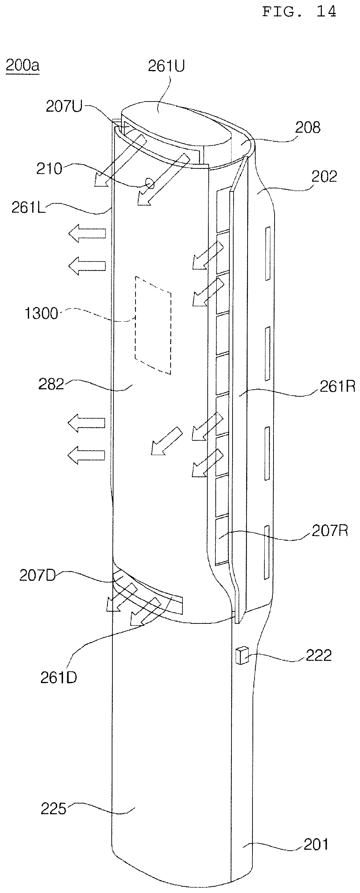

FIG. 12 is a diagram illustrating part of an internal block diagram of an air conditioner according to an embodiment of the present invention, and FIGS. 13 and 14 are diagrams briefly illustrating an exterior appearance of an air conditioner according to an embodiment of the present invention.

More specifically, FIG. 12 shows examples of a vane driving unit, also referred to as the vane driver, 1210 and a fan driving unit, also referred to as the fan driver, 1220 included in a driving unit 280a of the air conditioner 200a in the case where the home appliance shown in FIG. 11 is the air conditioner 200a shown in FIGS. 13 and 14.

FIGS. 13 and 14 are sketches briefly illustrating an exterior appearance of an interior unit of an air conditioner according to an embodiment of the present invention.

Referring to FIGS. 11 to 14, the air conditioner 200a according to an embodiment of the present invention may include: microphones 221 and 222 for receiving a user's voice command; a communication unit 270 capable of performing wire communication with another electronic device; a controller 240 for controlling overall operations; and a vane driving unit 1210 for driving a vane under the control of the controller 240.

In addition, the air conditioner 200a according to an embodiment of the present invention may further include a fan driving unit 1220 for driving a fan under the control of the controller 240.

The microphones 221 and 222 may receive an external audio signal, such as a user's voice command. In addition, the micro phones 221 and 222 may acquire an external audio signal, such as a user's voice command, and process the external audio signal into an electric signal.

The air conditioner 200a according to this embodiment may include: a sucking body 202 in which an air inlet (not shown) is formed; a heat exchanger (not shown) through which air suctioned via the air inlet passes; a fan (not shown) sucking air via the air inlet to allow the air to pass through the exchanger and blowing the heat-exchanged air; and air outlets 207R, 207U, and 207D through which air is discharged to the inside again.

In addition, wind direction adjustment means, such as a louver (not shown) for adjusting a direction of discharged air and/or vanes 261R, 261L, 261U, and 261D, may be disposed in the outlets 207R, 207U, and 207D. In addition, the angle and direction of the wind direction adjustment means may be adjusted by driving a motor under the control of the controller 240. Accordingly, it is possible to adjust the direction of air discharged through the outlets 207R, 207U, and w07D. In addition, by controlling operation of the wind direction adjustment means, it is possible to adjust a blowing direction and a blowing range of air.

For example, the vanes 261R, 261L, 261U, and 261D may be fixed to face one direction to enable air blowing in one direction, or an operation for changing a direction of the vanes continuously within a set range (the operation which is referred as "swing operation") may be performed so as to make air blows within a set range by changing an air blowing direction in the set range. In addition, by adjusting an angle range for the swing operation of the vanes 261R, 261L, 261U, and 261D, it is possible to narrow or widen a blowing range.

Meanwhile, a fan may be installed in the air conditioner to control an air flow along which air sucked through an air inlet is discharged to an indoor space through the air outlets 207R, 207U, and 207D. Rotation of the fan is controlled by the fan driving unit 1120, and operation of the fan driving unit 1220 is controlled by the controller 240.

Thus, the controller 240 may control the vane driving unit 1210 and the fan driving unit 1220 to control a direction of an air flow (air current) discharged from the air conditioner 200a. The controller 240 may control an amount and a speed of the air current, and may control a blowing direction adjustment means, such as a louver and a vane, to control the direction of the air current.

Meanwhile, the air conditioner may include a plurality of vanes 261R, 261L, 261U, and 261D. In addition, at least some of the plurality of vanes 261R, 261L, 261U, and 261D may operate in a different manner.

For example, the upper vane 261U may be disposed above the fan to elevate, and may elevate upon operation and be driven. To this end, the air conditioner 200a may include an elevating mechanism 1211 which elevates the upper vane 261U.

In addition, the upper vane 261U may function as an upper body that elevates to discharge at least some air blown from the fan through the air outlet 207U.

The sucking body 202 may be installed in the upper side of the base 201. Together with the base 201, the sucking body 202 may define an exterior rear upper surface of the air conditioner 200a. The sucking body 202 may define an exterior rear upper surface of the air conditioner 202. Together with the base 201, the sucking body 202 may construct a rear case of the air conditioner 201. The sucking body 202 may be a rear upper case of the air conditioner 200a, and the base 201 may be a rear lower case of the air conditioner.

In the base 201, the controller 240 for controlling various electronic components of the air conditioner may be installed. The various electronic components of the air conditioner may include a fan and the like. In the base 201, a base cover 225 may be installed at the front of the base 201.

The air conditioner may further include a cleaning unit (not shown) for purifying air. The cleaning unit may be disposed in the sucking body 202. The cleaning unit may be disposed before a heat exchanger in an air flowing direction. The cleaning unit may be provided between the sucking body 202 and the heat exchanger, and may be provided behind the sucking body 202. The cleaning unit may include a filter that filters out foreign substances from the air. The cleaning unit may include an ion generator that generates ions. The cleaning unit may include an electrostatic precipitator that collects foreign substances using the force of electrostatic charge. The cleaning unit may include at least one of the filter, the ion generator, or the electrostatic precipitator.

The heat exchanger may be disposed at the front of an air inlet. The heat exchanger may exchange heat of air sucked through the inlet with a refrigerant. The heat exchanger may be installed to be provided between the air inlet and the fan.

When a compressor installed in an exterior unit is driven, a low-pressured refrigerant may pass through the heat exchanger and the heat exchanger may cool down air having passed through an air inlet. When the compressor is turned on, the heat exchanger may cool down air by exchanging heat with the refrigerant, and the air conditioner may function as an air cooler.

The fan may be disposed at the front of the heat exchanger. The fan may be configured as a centrifugal fan that sucks air from the rear and blows the air in at least one direction selected from among the upward, downward, left and right directions. The fan may be configured as a sirocco fan. The fan may be configured as a sirocco fan that flows air in four directions that are the upward, downward, left and right directions.

The fan may include a plurality of blower fans. The plurality of blower fans may be sequentially arranged in the upward-downward direction. Each of the plurality of blower fans may be configured as a sirocco fan.

On the front surface of the upper vane 261U, an upper front air outlet 207U may be formed. On the bottom surface of the upper vane 261U, an air inlet (not shown) through which air blown upwards may be formed. The upper vane 261U may guide air, blown by inner fans in the upward direction, in the forward direction.

The upper vane 261U may be disposed above the fan to elevate. When the upper vane 261U elevates, the upper front air outlet 207 may elevate to discharge air. When the upper vane 261U moves downward, the upper front air outlet 207 may be hidden.

The air conditioner may further include an elevation guide 208 that guides the upper vane 261U to elevate. The elevation guide 208 may be mounted to be provided above the fan and the heat exchanger. When the upper vane 261U moves upward, the upper front air outlet 207U may be positioned above the lift guide 207 to discharge air. When the upper vane 261 moves downward, the upper front air outlet 207U may be positioned inside the elevation guide 208 to be hidden.

The elevating mechanism 1211 may include a driving power source, such as a motor, and a driving power force transferring member, which elevates the upward vane 261U upon driving of the driving power source. The driving force transferring member may include a pinion mounted on the driving power source, or a rack engaged with the pinion.

The elevating mechanism 1211 may elevate to a different height according to an operation mode. The controller 240 may control the elevating mechanism 1211 by a user's selection of an operation mode.

In one example, the controller 240 may elevate the upper vane 261U to the maximum opening height at which the upper front air outlet 207 is opened to the maximum possible extent according to an operation mode. In another example, the controller 240 may elevate the upper vane 261U to a height at which the upper front air outlet 207U is partially opened.

On one side surface of the air conditioner 200a, an air outlet 207R through which air blown from a side direction from the fan may be formed.

In addition, on one side surface of the air conditioner, side vanes 261R and 261L may be formed which close and open the left air outlet and the right air outlet 207R. The side vanes 261R and 261L may include the left vane 261L and the right vane 261R.

The side vanes 261R and 261L may be rotatably mounted. The air conditioner may include side driving devices 1212 and 1213 that rotate the side vanes 261R and 261L. The side driving devices 1212 and 1213 may include a left vane driving mechanism 1212 and a right vane driving mechanism 1213.

The side driving devices 1212 and 1213 may include a driving power source, such as a motor. The side driving devices 1212 and 1213 may include at least one driving power transfer member, such as a link and a gear, which is connected to the driving power source to rotate the side vanes 261R and 261L.

The side driving devices 1212 and 1213 may be controlled in a cooling mode by the controller 240. In addition, under the control of the controller 240, the side driving devices 1212 and 1213 may rotate the left vane 261L and the right vane 261R by a specific opening angle.

Accordingly, it is possible to control a blowing direction, and, by performing a swing operation, air may be blown within a set range while the blowing direction keeps being changed. In addition, by adjusting an angle range of the swing operation, an air blowing range may be narrowed or widen.

The air conditioner may further include a lower vane 261D which is located in the lower side of the air conditioner and at which the lower front air outlet 207D is formed.

The lower vane 261D may discharge air, blown downward from the fan, in a forward direction. In the lower vane 261D, a path through which air passes may be formed. On the front surface of the lower vane 261D, the lower front air outlet 207D through which air is discharged to the outside may be formed.

The air conditioner may further include an opening and closing mechanism 1214 for opening and closing the lower front air outlet 207D. To opening and close the lower front air outlet 207D, the opening and closing mechanism 1214 may include a moving kit (not shown) that moves the lower vane 261D. The moving kit may include: a driving power source such as a motor; a moving kit carrier in which the moving kit is seated; and at least one driving power transfer member that moves the moving kit carrier forward and backward when the driving power source operates.

The lower vane 261D may move forward to close the lower front air outlet 207D, and move backward to open the lower front air outlet 207D.

When operating in a specific mode, the opening and closing mechanism 1214 may be controlled to open the lower front air outlet 207D.

The air conditioner may further include a blower cover 282 disposed in front of the fan, and the blower cover 282 may define a front upper exterior appearance of the air conditioner. The blower cover 282 may be provided in the upper side of a base cover 225. Together with the base cover 225, the blower cover 282 may define a front side appearance of the air conditioner. The blower cover 282 may be a front upper cover of the air conditioner, and the base cover 225 may be a front lower cover of the air conditioner.

The air conditioner may include a display 292 that displays diverse information. In addition, the air conditioner may further include an audio output unit 292 that outputs an audio signal, and a speaker of the audio output unit 292 may be provided on the front surface of the air conditioner or at an appropriate position.

In addition, the air conditioner may include: a manipulation unit 230 having a plurality of buttons through which various commands can be input, and a camera capable of capturing an image of an ambient area in a specific range.

Meanwhile, according to one aspect of the present invention, a front panel may be provided on the front surface of the blower cover 282 or the base cover 225. The display 292, the speaker of the audio output unit 292, and manipulation buttons of the manipulation unit 230 may be provided on the front panel 1300.

The air conditioner may operate according to a plurality of operation modes. The controller 240 may control the driving unit 1210 and the fan driving unit 1220 according to a selected operation mode.

For example, in a specific operation mode, the controller 240 may perform control to open all outsets of the plurality of vanes 261R, 261L, 261U, and 261D.

Alternatively, in a specific operation mode, the controller 240 may control a specific vane so that an air outlet of the specific vane remains closed. For example, in a specific operation mode, the controller 240 may control the lower vane 261D to remain closed.

In addition, according to an operation mode, the controller 240 may adjust a lifting height of the upper vane 261U and an opening angle of the left/right vanes 261R or 261L.

In addition the controller 240 may control a rotation speed of the fan according to an operation mode in order to adjust an amount of wind.

Meanwhile, the exterior appearance and structure of the air conditioner shown in FIGS. 13 and 14 are exemplary, and thus, the present invention is not limited thereto. For example, the position, number, and structure of each of the microphones 221 and 222, the camera 210, the audio output unit 291, and vanes 261R, 261L, 261U, and 261D may vary depending on design or functional specification.

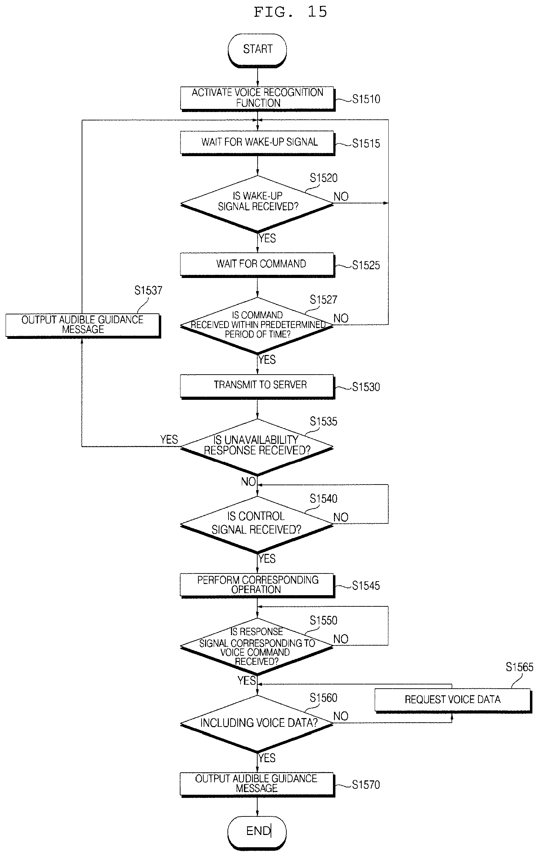

FIG. 15 is a flowchart illustrating a method for operating a home appliance according to an embodiment of the present invention.

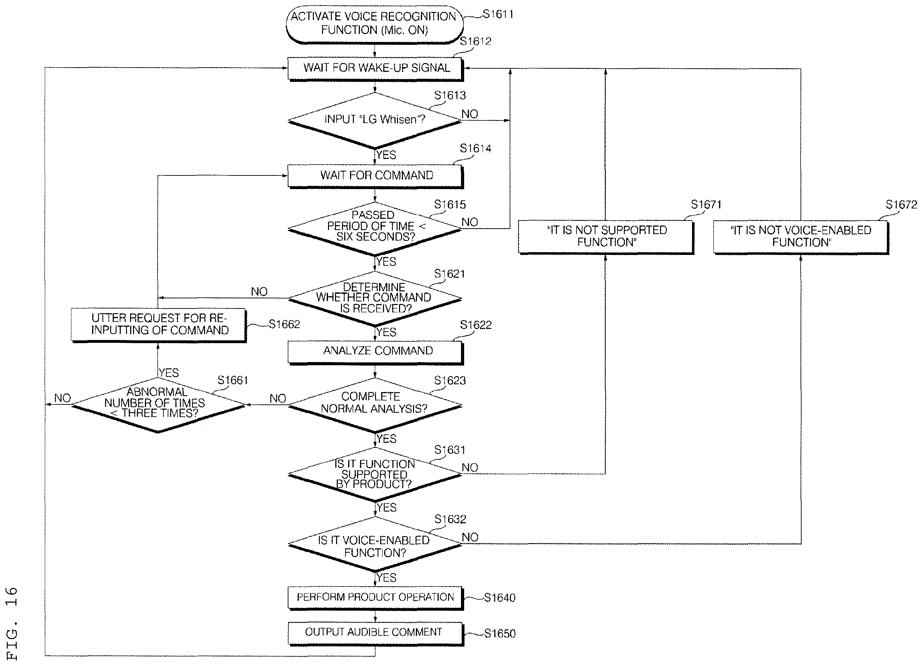

FIG. 16 is a flowchart illustrating a method for operating a smart home system including a voice recognition server system and a home appliance according to an embodiment of the present invention.

FIGS. 17 and 18 are diagrams for explaining information that is provided by a home appliance during a voice recognition and control process according to an embodiment of the present invention.

Referring to FIG. 15, the home appliance 200 may activate a voice recognition function upon a user input in S1510. Upon the user input, the home appliance of the home appliance 200 may activate the microphones 221 and 222.

Alternatively, the home appliance 200 may automatically activate a voice recognition function according to at least one setting regarding activation of the voice recognition function.

For example, when power is on, the home appliance 200 may automatically activate the microphones 221 and 222 and activate the voice recognition function.

The home appliance 200 according to an embodiment of the present invention may provide User Experience (UX) which takes into consideration various situations that could occur during the voice recognition process and the home appliance control process.

The controller 240 may control the display 292 to provide visual information in response to each step of the voice recognition process and the home appliance control process.

In addition, the controller 240 may control the audio output unit 291 to provide audible information in response to each step of the voice recognition process and the home appliance control process.

FIG. 17 shows an example of the display 292 provided in the air conditioner 200a in the case where the home appliance 200 is the air conditioner 200a.

The controller 240 may perform a control operation so that an operation mode and the current state of the air conditioner 200a are displayed on the display 292.

The display 292 may display an operation mode, the current state, and setting items of the air conditioner 200a in the form of any of various visual images. The display 292 may display the operation mode, the current state, and the setting items of the air conditioner 200a in the form of a text, number, or symbol or in the form of a graphic image, such as an icon.

In addition, the display 292 may display information corresponding to each stage of processing a voice input.

Referring to FIG. 17, the display 292 may include a voice recognition icon 1720 that is turned on or off during a voice recognition process. For example, the display 292 may include a microphone icon 1721 indicating activation of a microphone, and a sound (or wing) icon 1722 disposed on the left/right side of the microphone icon 1721.

In addition, the display 292 may include one or more seven-segment displays 1711 and 1712 that includes a plurality of segments to display numbers.

For example, the display 292 may include two seven-segment displays 1711 and 1712.

The seven segment displays 1711 and 1712 may be a display for displaying numbers or a text, and each segment of the seven-segment displays 1711 and 1712 may include one or more light emitting devices and display at least one number or a text using a combination of independently driving segments.

The seven-segment displays 1711 and 1712 defined in the present invention may have a general seven-segment structure in which a plurality of light emitting devices is selectively turned on to light up a number form, and may include a structure in which a number-shaped graphic, such as 7 segments, is output on a liquid display device. That is, as for the seven-segment displays 1711 and 1712, an output device having any form to be output in the shape of 7 segments may be applied.

Meanwhile, a pair of seven-segment displays 1711 and 1712 may be referred to as 88 segment display 1710.

The display 292 of the air conditioner 200a may use the 88 segment display 1710 particularly to display temperature.

In addition, the display 292 may include, a reservation setting indicator 1731, an operation sound indicator 132, a Wi-Fi indicator 1733, a power indicator 1741, an auto dry indicator 1742, an operation type indicator 1750, a wind speed indicator 1760, etc.

Each of the indicators 1731, 1732, 1733, 1741, 1742, 1750, and 1760 may be displayed in the form of a specific text and/or icon.

FIG. 18 is a table showing visual information displayed on the display 292 and audible guidance messages output by the audio output unit 291 at each stage of a voice recognition process.

Referring to FIGS. 15 to 18, when a voice recognition function is activated, the display 292 may light up the microphone icon 1721, and the controller 240 may perform a control operation to enter a wake-up signal standby mode for receiving a wake-up voice signal including a preset call word in S1515.

Meanwhile, when the voice recognition function is deactivated, the microphone icon 1721 may stops being displayed.

In addition, the audio output unit 291 may output an audible guidance message for notifying a user's utterance including a call word. For example, when the call word includes "LG Whisen", the audio output unit 291 may output an audible guidance message in a voice form, such as "If you say LG Whisen, voice recognition function will be activated".

Meanwhile, in the case where the microphones 221 and 222 of a home appliance are activated, the microphones 221 and 222 may receive an input voice and transmit the received voice to the controller 240.

Meanwhile, when a wake-up voice signal including a preset call word is received via the microphone 221 or 222 in s1520, the home appliance 200 may switch to a command standby mode for receiving a voice command in S1525. When the wake-up voice signal is received via the microphone 221 or 222 in S1520, the controller 240 may perform a control operation to enter the command standby mode in S1525.

In addition, under the control of the controller 240, the display 292 may display the sound icons 1722, which is located on the left and right sides of the microphone icon 1721, in a blinking manner.

Accordingly, a user may intuitively notice that the home appliance 200 is waiting for the user's command input.

In addition, flickering the sound icons 1722 may be performed constantly during the command standby mode.

Alternatively, after a preset period of time has passed after the entrance to the command standby mode, the sound icon 1722 may be kept turned on. In some implementations, when a user's voice command is received, the sound icon 1722 may blink again for the preset period of time.

If the home appliance 200 always waits for a natural language command, it may increase the burden on power consumption for the voice recognition function, a CPU occupation rate, and loads on servers of the voice recognition server system.

Thus, the home appliance 200 may transmit, to the home appliance 200, only a voice signal received in the command standby mode.

In addition, the home appliance 200 may set a condition for a command waiting time. When a command is received within the set time, the home appliance 200 may receive sound until the completion of the command, and transmit the sound to a server.

According to one aspect of the present invention, the home appliance 200 may perform a voice recognition process of up to the step of determining whether a call word voice is received, and other subsequent steps for voice recognition of a user's voice input may be performed by voice recognition server system 100.

Alternatively, whether a call word voice is received may be performed by both the home appliance 200 and the voice recognition server system 100.

Meanwhile, the call word may be set by a manufacturer, or a different call word may be set for each home appliance. For example, call words may be set to be "LG Whisen" for an air conditioner and "LG Dios" for a refrigerator. In addition, the call word may be changed by a user.

Meanwhile, the controller 240 may perform control to transmit a user's voice command, which is received after recognition of a wake-up voice signal, to the voice recognition server system 100 via the communication unit 270 in S1530.

Meanwhile, waiting for a user's voice command for an unlimited period of time does not fit the intent of the user who does not input any command. Thus, the command standby mode may be set to process only a voice command received within a specific period of time in S1527.

In this case, the controller 240 may perform control so that voice data including the voice command received within the preset period of time is transmitted to the voice server 110 in S1530.

Meanwhile, if the voice command is not received within the preset period of time in S1527, the controller 240 may switch to the wake-up signal standby mode again.

In addition, if a voice command is received via the microphone 221 or 222 within the preset period of time and the communication unit 270 receives voice data in S1530, the display 292 may sequentially turn on segments provided in the outer area among a plurality of segments of the segment display 1710.

Meanwhile, while the 88 segment display 1710 rotates in the clockwise direction or the counter-clockwise direction in response to the transmission of the voice data in S1530, the audio output unit 291 may output an effect sound, music, or an audible guidance message.

The audio output unit 291 may output an effect sound, such as system processing sound, which is an audible guidance message for notifying that processing a command is ongoing.

The audio output unit 291 needs to output an audible guidance message in response to occurrence of a specific event. If the specific event, for example, receipt of a signal from a server, occurs when the audio output unit 291 is outputting a specific audible guidance message, the current audible guidance message may stop and this may make a user to feel uncomfortable.

Thus, while a voice command is processed in the voice server 110, it is desirable that the audio output unit 291 plays back specific music to make the user feel comfortable.

In addition, if processing a command is delayed, the audio output unit 291 may output an audible guidance message, such as "Please hold on."

In some implementations, if the communication unit 270 fails to receive a response signal based on the voice command from the voice server 110 within a first period of time, the audio output unit 291 may output an audible guidance message for requesting a user to wait. In this case, if the communication unit 270 fails to receive any response signal based on the voice command within a second period of time subsequent to the first period of time, the audio output unit 291 may output an audible guidance message for requesting re-inputting of a voice command.

If the communication unit 270 fails to receive any response signal based on the voice command even after the second period of time, the control unit 240 may switch the operation mode to the command standby mode.

The home appliance 200 according to an embodiment of the present invention may provide specific information to a user in a different way.

For example, when a voice command is received within a preset period of time, the home appliance 200 according to an embodiment of the present invention may operate such that the driving unit 280 performs a feedback operation in response to receipt of the command so as to notify a user of the receipt of the command.

In some implementations, when the voice command is received within the preset period of time in S1527, the controller 240 may perform control so that a feedback operation corresponding to receipt of the voice command is performed to notify that the home appliance 200 has received the command.

In this case, the driving unit 280 may perform a preset operation under the control of the controller 240.

For example, when the home appliance 200 is the air conditioner 200a, the driving unit 280 may include a vane driving unit 1210, a fan driving unit 1220, etc.

As the voice command is received within the preset period of time, the vane driving unit 1210 may drive one or more vanes 261R, 261L, 261U, and 261D to perform at least one of a lifting operation, a moving operation, a rotating operation, or a swing operation.

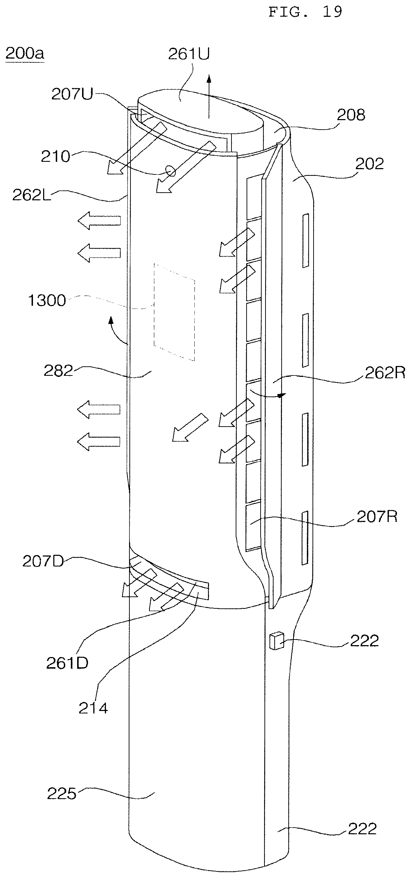

Referring to FIG. 19, when a voice command is received via the microphone 221 or 222 of the air conditioner 200a within a preset period of time, the vane driving unit 1210 may move an upper vane 261U up to a specific height.

In addition, the vane driving unit 1210 may rotate the left vane 261L and the right vane 261R by a specific angle.

In addition, the vane driving unit 1210 may move the lower vane 261D inwardly to thereby open a lower front air outlet 207D.

In the case where the air outlets are closed because the air conditioner 200a is not operating in a specific mode, if a voice command is received, the vane driving unit 1210 may drive the plurality of vanes 261R, 261L, 261U, and 261U under the control of the controller 240.

In another example, the vane driving unit 1210 may drive some of the plurality of vanes 261R, 261L, 261U, and 261D.

In another example, if a voice command is received via the microphone 221 or 222 within a preset period of time, the vane driving unit 1210 may rotate the left vane 261L and the right vane 261R by a specific angle under the control of the controller 240.

In addition, the vane driving unit 1210 may control the left vane 261L and the right vane 26R to perform a swing operation which indicates rotating repeatedly within a specific range.

According to an embodiment of the present invention, when a voice command is received within a preset period of time, the vanes 261R, 261R, 261U and 261D may be moved to allow a user to be intuitively aware of the receipt of the command, thereby increasing user reliability.

In addition, when a user inputs a voice command to the air conditioner 200a, the user usually intends to operate the air conditioner 200a. Thus, in this case, the vanes 261R, 261L, 261U, and 261D are moved pre-emptively and then an operation corresponding to the voice command determined later on is performed, thereby enabled to more quickly respond to the user's voice command.

Meanwhile, the voice server 110 and the voice recognition server system 100 may recognize and process voice data including a voice command received from the home appliance 200, as described above with reference to FIGS. 1 to 9.

Accordingly, when the communication unit 270 receives a control signal based on the voice command from the home appliance control server 130 in S1540, the controller 240 may control the home appliance 200 to operate in response to the received control signal in S1545.

In addition, when the communication unit 270 receives a response signal based on the voice command from the voice server 110 in S1550, the controller 240 may control the audio output unit 291 to output an audible guidance message corresponding to the response signal in S1570.

In some implementations, when the response signal does not include voice data in S1560, the controller 240 may perform control to request voice data from the voice server 110 in S1565 and to receive the requested voice data from the voice server 110.

Meanwhile, according to a voice recognition result, a signal corresponding to voice recognition failure may be received from the voice server 110 via the communication unit 270. In this case, the controller 240 may control the audio output unit 291 to output an audible guidance message for requesting re-inputting of a voice command and to switch the operation mode to the command standby mode.

In addition, depending on a determination as to whether a determined voice command is supported, a signal for notifying that the voice command is about an unsupported function may be received from the voice server 110 via the communication unit 270 in S1535. In this case, the controller 240 may control the audio output unit 291 to output an audible guidance message for notifying that the voice command is about an unsupported function in S1537.

In this case, the controller 240 may perform control to switch to the wake-up signal standby mode.

Alternatively, the controller 240 may perform control to switch to the command standby mode again.

According to the present invention, as visual information and/or an audible guidance message suitable for each situation are provided, it is possible to accurately find out which problem disrupts the normal operation at which step of a voice control command process. In addition, it increases freedom of a command for controlling a product, thereby improving usability of the product.

Referring to FIGS. 16 and 18, the home appliance 200 may activate a voice recognition function in S1611 to enter the wake-up signal standby mode for receiving a wake-up voice signal including a preset call word in S1612.

In response to the activation of the voice recognition function in S1611, the microphone icon 1721 on the display 292 may be turned on and the audio output unit 291 may output an audible guidance message for guiding a user's uttering of a call word.

When a preset call word, such as "LG Whisen" and "LG Dios", is received via the microphone 221 or 222 in S1613, the home appliance 200 may switch to the command standby mode for receiving a voice command in S1614.

In response to the entrance to the command standby mode in S1614, the display 291 may blink the wing-shaped sound icons 1722 located on the left and right sides of the microphone icon 1721.

The command standby mode may be set to process only a voice command received within a specific period of time in S1615. For example, six seconds may be set for the specific period of time, and, in this case, the controller 240 may perform control to transmit voice data, including a voice command received within the six seconds, to the voice server 110 in S1621.

In addition, if a voice command is received via the microphone 221 or 222 within the preset period of time and the communication unit 270 transmits voice data in S1621, the display 292 may sequentially turn on and off segments provided in the outer area among the plurality of segments of the display 1710.

In addition, in response to the transmission of the voice data in S1621, the audio output unit 291 may output an effect sound, music, or an audible guidance message while the 88 segment display 1710 rotates in the clockwise direction or the counter-clockwise direction.

Meanwhile, if the voice command is not received within the preset period of time in S1621, the controller 240 may perform control to switch the operation mode to the wake-up signal standby mode.

According to one aspect of the present invention, the home appliance 200 may perform a voice recognition process up to the stage of receiving a call word, and other following stages of the voice recognition process with respect to a user's voice input may be performed by the voice recognition server system 100.

When voice data including the voice command is received from the home appliance 200 in S1621, the voice server 110 may perform natural-language processing to analyze the user's intent and determine the voice command in S1622.

When the voice command is not properly analyzed in S1623, the voice server 110 may inform the home appliance 200 of failure of the voice command analysis, and the home appliance 200 may output an audible guidance message including a request for re-input of a command in S1622.

In this case, the procedure of, in response to failure of voice command analysis, requesting re-inputting of a command and analyzing a re-input command may be set to be performed by a preset number of times in S1661.

For example, if the analysis fails three times or more, the controller 240 does not request re-inputting of a command and instead may perform control to switch to the wake-up signal standby mode again.

Meanwhile, if the voice command is properly analyzed in S1623, the voice server 110 may transmit a signal corresponding to the determined voice command to the associated service server 120.

Meanwhile, the associated service server 120 may determine whether the determined voice command is supported.

For example, the associated service server 120 may determine whether the determined voice command is about a function supported by the home appliance 200 in S1631.

In addition, the associated service server 120 may determine whether the determined voice command is a function supported by the corresponding home appliance 200 in the current state, that is, whether the determined voice command is a function that is enabled responsive to a voice command in S1632.

If the determined voice command is not a supported function, the associated service server 120 may transmit, via the voice server 110 to the home appliance 200, a response signal for notifying that the determined voice command is not a supported function.

Accordingly, the home appliance 200 may output an audible guidance message, such as "It is not a supported function" and "It is not a voice-enabled function", in S1671 and 1672.

In addition, the controller 240 may perform control to switch to the wake-up signal standby mode.

If the determined voice command is about the home appliance 200, the associated service server 120 may perform a corresponding operation by communicating with the home appliance control server 130.

Alternatively, if the determined voice command is not about the home appliance 200, the associated service server 120 may perform a corresponding operation by communicating with an external service.

If the determined voice command is to control the home appliance 200, the associated service server 120 may generate a request signal corresponding to the determined voice command and transmit the request signal to the home appliance control server 130.

The home appliance control server 130 may receive the request signal from the associated service server 120 and transmit a control signal based on the request signal to the home appliance 200.

For example, when a request for changing temperature set in the air conditioner 200a is received, the home appliance control server 130 may transmit a control signal for changing the set temperature to the air conditioner 200a.

Meanwhile, the home appliance 200 may perform a corresponding operation in accordance with the control signal received from the home appliance control server 130 in S1640.

In addition, after performed a requested operation, the home appliance 200 may transmit, to the home appliance control server 130, a signal for notifying that the requested operation has been performed.

In addition, the home appliance control server 130 may receive a response signal responsive to the control signal from the home appliance 200, and transmit processing result information for notifying successful completion of the requested operation to the associated service server.

The associated service server 120 may transmit a signal corresponding to processing result information, for example, "Temperature of the air conditioner is set to 18 degrees", to the NLP server 112. The NLP server 112 may transmit a response signal based on the determined user command to the home appliance 200.

Meanwhile, based on voice data received from the voice server, the home appliance 200 may output an audible guidance message including audible guidance, such as "Temperature of the air conditioner is set to 18 degrees", in S1650.

FIG. 20 is a flowchart illustrating a method of operating a home appliance according to an embodiment in which only a command is transmitted to a voice recognition server system, the flowchart which illustrates steps from activation of a voice recognition function to transmission of a user's voice command to the voice recognition server system 100.

Referring to FIG. 20, in response to activation of a voice recognition function in S2010, the home appliance 200 may enter a wake-up signal standby mode for receiving a wake-up voice signal including a preset call word in S2020.

In the wake-up signal standby mode in S2020, if a user utters the preset call word and the home appliance 200 receives the preset call word in S2030, the home appliance 200 may switch to a command standby mode for receiving a voice command in 2040.

In the command standby mode S2040, if the user utters a voice command and the home appliance 200 receives the voice command in S2050, the home appliance 200 may transmit data including an audio file of the received voice command to the voice recognition server system 100 in S2060.

Meanwhile, the voice server 110 of the voice recognition server system 100 may perform a natural-language voice recognition process on the audio file of the received voice command.

As such, if sound recognized as a command is input after the home appliance 200 enters the command standby mode by recognizing a call word, the home appliance 200 may record the sound and transmit the sound to the voice recognition server system 100 in a streaming manner.

In this case, the front part of the command may not be recognized so an audio file with the front part of the command excluded may be transmitted to the voice recognition server system 100.

The command from which the front part thereof is removed may not be properly recognized by the voice recognition server system 100 in a process for intent analysis.

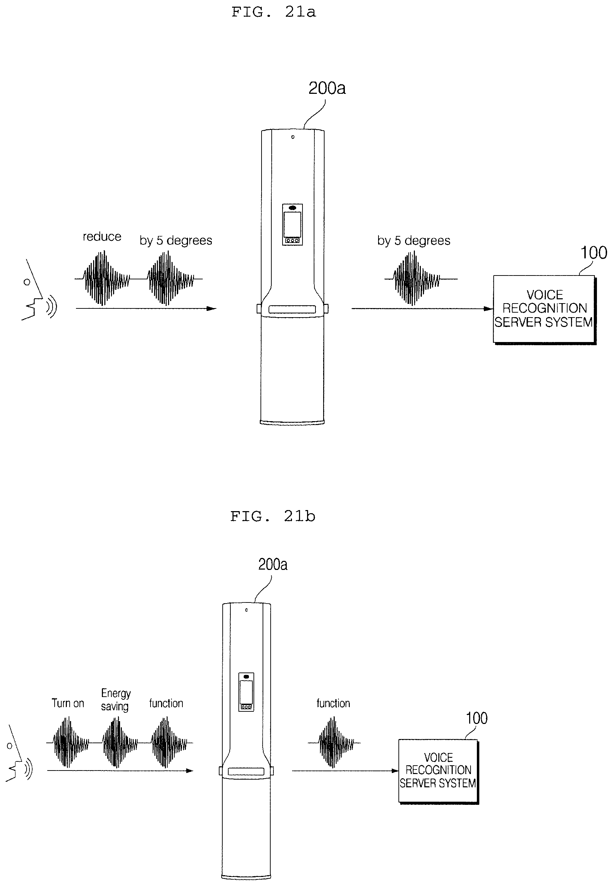

FIGS. 21A and 21B are diagrams for explanation of false recognition that could occur in a voice recognition process according to the operating method shown in FIG. 2, the diagram which shows the case where the home appliance 200 is implemented as the air conditioner 200a.

Referring to FIG. 21A, a user utters a voice command "reduce by 5 degrees", and the air conditioner 200a may receive the user's voice command via the audio input unit 220.

However, the air conditioner 200a may determine a wrong start point of the user's voice command "Reduce by 5 degrees."

In this case, the air conditioner 200a may transmit an imperfect voice command "by 5 degrees", which is what is left after the audio file of "reduce" is excluded from the full voice command "reduce by 5 degrees", to the voice recognition server system 100.

If receiving an imperfect voice command, such as "by 5 degrees", the voice recognition server system 100 is not able to accurately analyze the user's intent even though the received audio file is accurately recognized.

Thus, the home appliance 200 and the voice recognition server system 100 are not able to perform operations that coincide with the intent of the user's voice command.

Referring to FIG. 21B, a user utters a voice command "Turn on Energy saving function", and the air conditioner 200a may receive the user's voice command via the audio input unit 220.

However, the air conditioner 200a may determine a wrong start point of the voice command "Turn on Energy saving function."

In this case, the air conditioner 200a may transmit an imperfect voice command such as "function", which is what is left after the front part "Turn on Energy saving" excluded from the full voice command "Turn on Energy saving function", to the voice recognition server system 100.

Accordingly, the voice recognition server system 100 may receive the imperfect voice command such as "function." Thus, even though fully recognizing the received audio file, the voice recognition server system 100 is not able to accurately analyze the user's intent, for example, which function the user wishes to operate out of various functions including a dehumidification function, a energy saving function, and an air purifier function.

Thus, the home appliance 200 and the voice recognition server system 100 are not able to perform operations that fits the intent of the user's voice command.

If the home appliance 200 determines a wrong start point of a command, the command from which a front part is excluded may be transmitted to the voice recognition server system 100, and therefore, analysis cannot be performed accurately and a recognition rate may be reduced.

Thus, to solve this problem, an embodiment of transmitting a whole voice input including a call word as well as a command to the voice recognition server system 100 will be proposed in the following. If the entire voice input including a call word as well as a command is transmitted, it may prevent a front part of the command from being excluded, thereby improving a recognition rate.

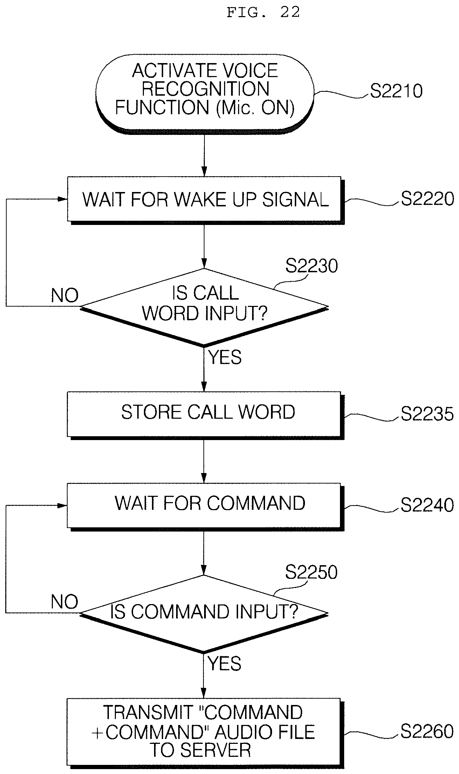

FIG. 22 is a flowchart illustrating a method of operating a home appliance according to an embodiment of the present invention. More specifically, FIG. 22 shows a flowchart of an embodiment in which the home appliance 200 transmits both a call word and a command to the voice recognition server system 100.

Thus, the embodiment in FIG. 22 is different from a procedure from the voice recognition activation operation S1510 and S1611 to the command transmission operation S1530 and 1621 described with reference to FIGS. 15 and 16.

In addition, although operation subsequent to the command transmission operation S1530 and S1621 are not illustrated in FIG. 22, the same operations subsequent to the command transmission operation S1535 and S1622 described with reference to FIGS. 15 and 16 may be performed.

Hereinafter, difference between the example shown in FIG. 22 and the example shown in FIGS. 15 and 16 will be primarily described.

Referring to FIG. 22, the home appliance 200 may activate the voice recognition function upon a user input in S2010. Upon the user input, the controller 240 of the home appliance 200 may activate the microphones 221 and 222.

Alternatively, the home appliance 200 may automatically activate settings regarding activation of the voice recognition function. For example, when power is on, the home appliance 200 may automatically activate the microphones 221 and 222 to activate the voice recognition function.

In response to the activation of the voice recognition function in S2210, the home appliance 200 may enter the wake-up signal standby mode for receiving a wake-up voice signal including a preset call word in S2220.

In the wake-up signal standby mode S2220, the home appliance 200 may receive a voice signal via the audio input unit 220 including one or more microphones 221 and 222 in S2230.

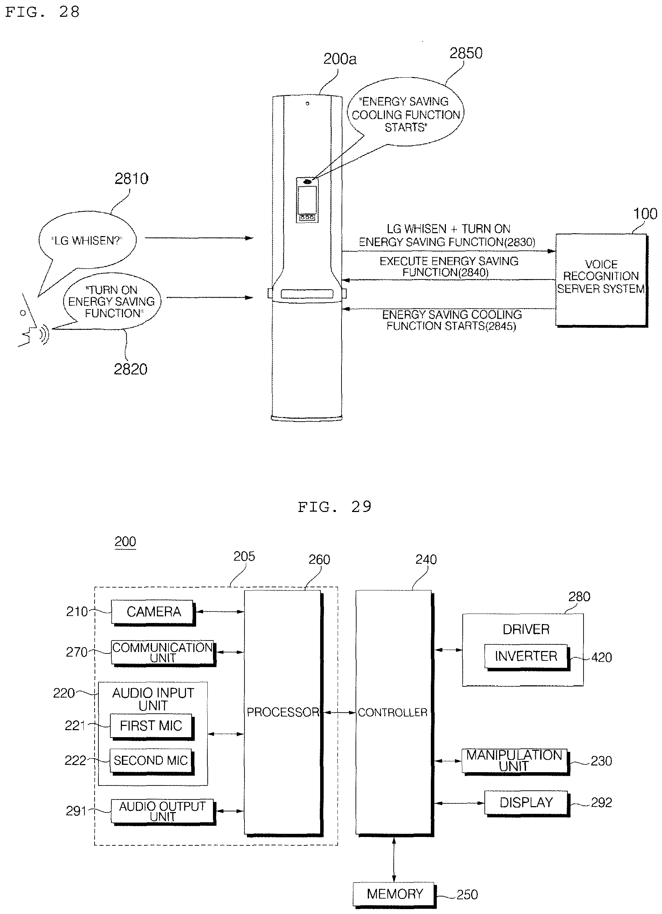

The controller 240 and/or a voice recognition module 205 (see FIG. 29) of the home appliance 200 may determine whether the voice signal received via the audio input unit 220 includes the call word.

If sound lauder than a specific level is input when the voice recognition function is activated, the controller 240 and/or the voice recognition module 205 may determine whether the voice signal includes a call word.

Meanwhile, if the voice signal includes the call word, the controller 240 may perform control to store an audio file of the received voice signal (call word) in the storage unit 250 or an additional storage space in S2235.

In addition, the controller 240 may perform a control operation to enter the command standby mode for receiving a user's voice command for a preset period of time in S2240.

That is, when a call word is input, the home appliance 200 may enter the command standby mode and store an audio file of the call word.

Meanwhile, waiting for a user's voice command for an unlimited period time leads to waste of system resources and does not fit the intent of the user's not inputting a command, and thus, it is more desirable that the command standby mode is set to process only a voice command which is input within a predetermined period of time.

In this case, the controller 240 may perform control to transmit voice data, including a voice command received within the preset period of time, to the voice server 110.

In addition, as described above with reference to FIGS. 15 and 16, if a voice command is not received within the preset period of time, the controller 240 may perform control to enter the wake-up signal standby mode in S2220.

If a voice command is received via the audio input unit 220 within the preset period of time in S2250, the controller 240 may control the communication unit 270 to transmit voice data, including the received voice command and the call word, to the voice recognition server system 100 in S2260.

If a command begins to be received, the controller 240 may store a command audio file, and, if completion of uttering the command is confirmed, the controller 240 may transmit the command audio file attached with the pre-stored call word audio file to the voice recognition server system 100.

The communication unit 270 may transmit an audio file, including the call word and the command, to the voice recognition server system 100 in a streaming manner.

Accordingly, the communication unit 270 is able to transmit voice data, including a full voice command, to the voice recognition server system 100, and the voice recognition server system 100 may analyze the call word and the command as a single audio file so that the front part of the command is prevented from being excluded.

In addition, it is possible to perform full analysis including converting a full command, of which a front part is not excluded, into a text and analyzing a user's intent, and therefore, a recognition rate may improve.

Meanwhile, as described above with reference to FIG. 22, if a voice command is received within a preset period of time, the driving unit 280 may perform a feedback operation in response to receipt of the command so as to notify that the command is received.

In some implementations, if the voice command is received within the preset period of time in S2250, the controller 240 may perform a control operation to perform a feedback operation in response to receipt of the command so as to notify that the command is received.

In this case, under the control of the controller, the driving unit 280 may perform a preset operation.

For example, in the case where the home appliance 200 is implemented as the air conditioner 200a, the driving unit 280 may include the vane driving unit 1210, the fan driving unit 1220, etc.

As the voice command is received within the preset period of time, the vane driving unit 1210 may drive one or more vanes 261R, 261L, 261U, and 251D to perform at least one of a lifting operation, a moving operation, a rotating operation, or a swing operation.

Meanwhile, the voice server 110 and the voice recognition server system 100 including the same may recognize and process voice data including a voice command received from the home appliance 200, as described with reference to FIGS. 1 to 9.

In addition, when receiving a control signal based on the voice command from the voice recognition server system 100, the controller 240 may perform a control operation in response to the received control signal.

As described above with reference to FIG. 15, if receiving a control signal based on the voice command in S1540, the communication unit 270 may control the home appliance 200 to operate in response to the received control signal in S1545.

Meanwhile, if a voice command is not received within a preset period of time in the command standby mode, the controller 240 may perform control to switch to the wake-up signal standby mode.

In addition, if the communication unit 270 receive a response signal based on the voice command from the voice server 110 in S1550, the controller 240 may control the audio output unit 291 to output an audible guidance message corresponding to the received response signal in S1570.

In some implementations, if the response signal does not include voice data in S1560, the controller 240 may perform control to receive voice data from the voice server 110 in S1565 and receive the requested voice data from the voice server 110.

Meanwhile, according to a result of voice recognition, the controller 240 may receive a signal corresponding to a failure of voice recognition from the voice server 110 via the communication unit 270. In this case, the controller 240 may control the audio output unit 291 to output an audible guidance message for requesting re-inputting of a voice command and to switch the operation mode to the command standby mode.

In addition, according to determination as to whether the determined voice command is supported, the controller 240 may receive a signal, which indicates that the voice command is about an unsupported function, from the voice server 110 via the communication unit 270 in S1535. In this case, the controller 240 may control the audio output unit 291 to output an audible guidance message for notifying that the voice command is about an unsupported function in S1537.

In this case, the controller 240 may control the operation mode to switch to the wake-up signal standby mode. Alternatively, the controller 240 may control the operation mode to switch to the command standby mode again.

Meanwhile, in some implementations, in the case where a voice command is received via the audio input unit 220 within the preset period of time, if the received voice command corresponds to a pre-stored keyword command, the controller 240 may perform control to perform an operation corresponding to the keyword command.

In addition, if a voice command received within the preset period of time does not correspond to a pre-stored keyword command, the controller 240 may perform control to transmit voice data, including the voice command and a call word, to the voice recognition server system 100.

That is, the home appliance 200 according to an embodiment of the present invention may autonomously respond to a keyword command including a simple keyword, and may support natural language processing-based voice control by use of the voice recognition server system 100. The keyword command may indicate a voice command that includes a specific keyword for controlling the home appliance 200.

For example, in the case where the home appliance 200 is the air conditioner 200a, a keyword command may include: a keyword corresponding to an accurate operation name, for example, "Turn on air purification", "Turn off air purification", "Turn on power-saving cooling", "Turn off power-saving cooling", "Turn on power-saving dehumidification", "Turn off power-saving dehumidification", "Power on", and "Power off"; and an operation intent keyword. The operation intent keyword may include "On", "Off", etc.

In addition, a keyword command may include a command for requesting state information of the home appliance, for example, "consumption of electricity", "current state", and "operation state".

In addition, in some implementations, a keyword command may be composed of keywords corresponding to an accurate name of a specific operation mode, for example, "Air purification", "Power-saving cooling", and "Power-saving dehumidification."

As described above with reference to FIGS. 1 to 10 and 16, the voice recognition server system 100 according to an embodiment of the present invention may include the voice server 110 which is configured to: receive voice data from the home appliance 200 and analyze the received voice data so as to determine a voice command.

The voice server 110 may receive voice data from the home appliance 200a, convert the received data into text data, and analyze the text data to determine a voice command.

In addition, the voice server 110 may transmit a signal corresponding to the determined voice command to a specific server.

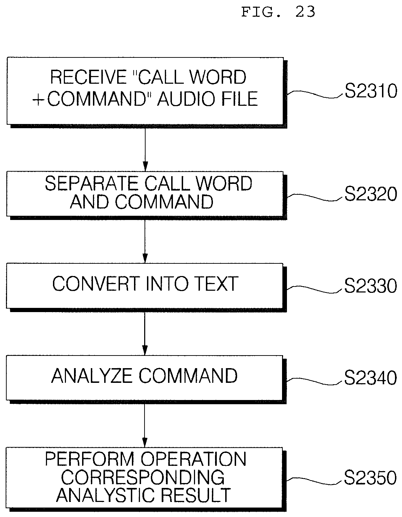

FIG. 23 is a flowchart illustrating a method for operating a voice recognition server system helpful in understanding the present invention.

Referring to FIG. 23, the voice recognition server system 100 helpful in understanding the present invention may receive voice data from the home appliance 200 in S2310. At this time, the voice data received by the voice recognition server system 100 may include not just a command but also a call word.

The voice server 110 of the voice recognition server system 100 may include voice command include a call word ad a command. More specifically, the ASR server 111 may receive voice data, including a call word and a command, from the home appliance 200.

Meanwhile, the voice recognition server system 100 may separate the call word and the command from the received voice data in S2320, and convert the command into text data in S2330.

The ASR server 111 may perform voice recognition on the received voice data to determine and separate the call word and the command in S2320.

In addition, the ASR server 111 may convert the separated command into text data in S2330. In addition, the ASR server 111 may transmit the text data to the NLP server 112.

Meanwhile, the voice recognition server system 100 may analyze the text data to determine a voice command in S2340.

According to an embodiment of the present invention, the home appliance 200 may have a source file at a time when recognizing a call word. When a command is completely uttered, the home appliance 200 may combine a call word audio file and a command audio file and transmit the combined file to the ASR server 111 in a streaming manner.

When the ASR server 111 and the NLP server 112 analyze the audio file, the call word and the command are analyzed together to find out an accurate start point of the command, and therefore, it is possible to accurately extract and analyze the command.

The NLP server 112 may determine a voice command by analyzing text data, received from the ASR server 111, according to a natural language processing algorithm.

The NLP server 112 is able to process a natural language, which is commonly used by people on a daily basis, according to the natural language processing algorithm, and to analyze a user's intent. The NLP server 112 may determine a voice command fitting the user's intent, by performing natural language processing on text data received from the ASR server 111.

Accordingly, the NLP server 112 is able to determine a voice command coinciding with the user's intent even though the user inputs a voice command in a commonly used language.

Meanwhile, the voice recognition server system 100 may perform an operation corresponding to the determined voice command and a result of analysis of the user's intent in S2350.

Detailed operations of the voice recognition server system 100 are already described above with reference to FIGS. 1 to 10 and 16.

For example, the voice recognition server system 100 may transmit a response signal based on the determined voice command to the home appliance 200. The response signal may include processing result information corresponding to the determined voice command.

In some implementations, the voice recognition server system 100 may convert the response signal based on the determined voice command into voice data, and transmit the voice data to the home appliance 200.

In addition, the voice recognition server system 100 may transmit a control signal based on the determined voice command to the home appliance 200.

According to this embodiment, the voice server 100 may additionally extract only a call word from a received audio file. In addition, the voice server 1010 may determine an audio file, of what is left after the call word is extracted from the original file, to be a command, and then the voice server 1010 may perform text conversion and intent analysis.

According to another embodiment of the present invention, the voice server 110 may convert a whole audio file into text, without extracting a call word, and then delete the call word from the text and perform intent analysis on the remaining text.

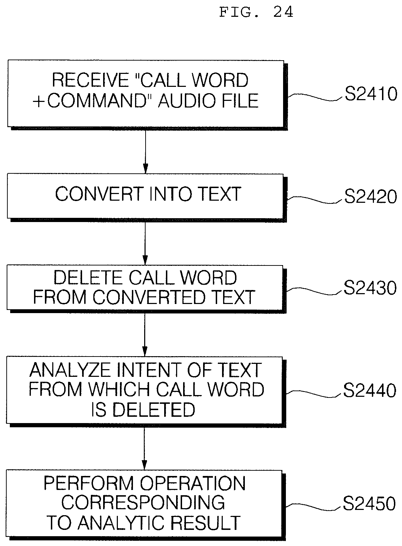

FIG. 24 is a flowchart illustrating a method of operating a voice recognition server system helpful in understanding the present invention.

Referring to FIG. 24, the voice recognition server system 100 helpful in understanding the present invention may receive voice data from the home appliance 200 in S2410. In this case, the voice data received by the voice recognition server system 100 may include not just a command but also a call word.

The voice server 110 of the voice recognition server system 100 may receive voice data, including a call word and a command, from the home appliance 200. More specifically, the ASR server 111 may receive voice data, including a call word and a command, from the home appliance 200.

The ASR server 111 may convert the received voice data into text data in S2420.

In addition, the ASR server 111 may delete the call word from the text data in S2430.

Meanwhile, the ASR server 111 may transmit the text data, from which the call word has been deleted, to the NLP server 112.

The NLP server 112 may analyze the text data, from which the call word has been deleted, to determine a voice command in S2440.

Accordingly, it is possible to improve recognition of a command, without need to concern a possibility the front part of a command could be excluded.

Meanwhile, the voice recognition server system 100 may perform an operation corresponding to the determined voice command and a result of analysis of the user's intent in S2450.

For example, the voice recognition server system 100 may transmit a response signal based on the determined voice command to the home appliance 200. The response signal may include processing result information corresponding to the determined voice command.

In some implementations, the voice recognition server system 100 may convert the response signal based on the determined voice command into voice data, and transmit the voice data to the home appliance 200.

In addition, the voice recognition server system 100 may transmit a control signal based on the determined voice command to the home appliance 200.

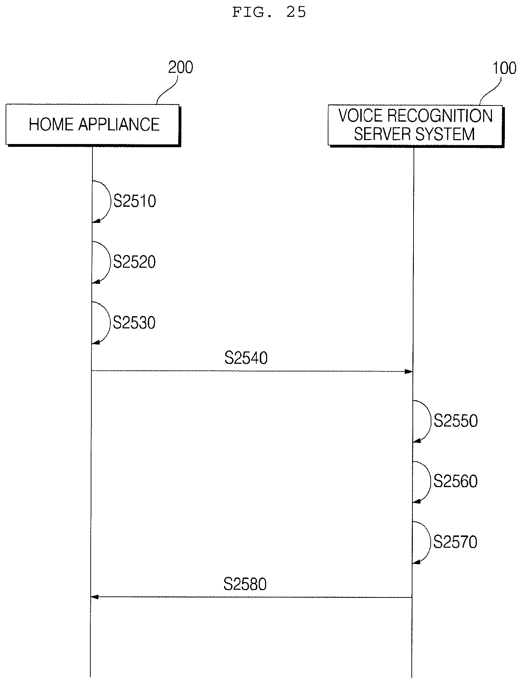

FIG. 25 is a diagram illustrating a signal flow in a home appliance and a voice recognition server system according to an embodiment of the present invention.

Referring to FIG. 25, the home appliance 200 according to an embodiment of the present invention may operate such that, in a wake-up signal standby mode for receiving a wake-up voice signal including a preset call word, a voice signal including the preset call word, for example, "LG Whisen" and "LG Dios", may be received via the audio input unit 220 in S2510.

While temporarily storing the received call word in the memory 250 or the like, the home appliance 200 may enter a command standby mode for receiving a user's voice command in S2520.

When a voice command is received via the audio input unit 220 within a preset period of time in S2530, the controller 240 may control the communication unit 270 to transmit voice data, including the received voice command and the call word, to the voice recognition server system 100 in S2540.

If a user's utterance is confirmed in S2530 while a command audio file is stored upon inputting of the command in S2530, the controller 240 may perform a control operation to transmit the command audio file combined with a prestored call word audio file to the voice recognition server system 100 in S2540.

The communication unit 270 may transmit an audio file, which is a combination of the call word and the command, to the voice recognition server system 100 in a streaming method.

Accordingly, voice data including a full voice command may be transmitted to the voice recognition server system 100, and the voice recognition server system 100 may analyze the call word and the command with a single audio file so that the front part of the command is prevented from being cut off.

Meanwhile, the voice recognition server system 100 may separate the call word from the received voice data in S2550, and convert the call word into text data in S2560.

Alternatively, the voice recognition server system 100 may convert the received voice data into text data in S2560, and separate the call word from the text data in S2550.

Meanwhile, by separating the command, received together with the call word, without any loss, the voice recognition server system 100 may perform voice recognition and analyze the user's intent according to a natural language voice recognition algorithm in S2570.

The voice recognition server system 100 may perform voice recognition and analyze the user's intent by setting an ending point of the call word or a specific point after the ending point of the call word to be a start point.

Thus, it is possible to prevent false recognition which could occur when a user's command is transmitted with part thereof excluded.

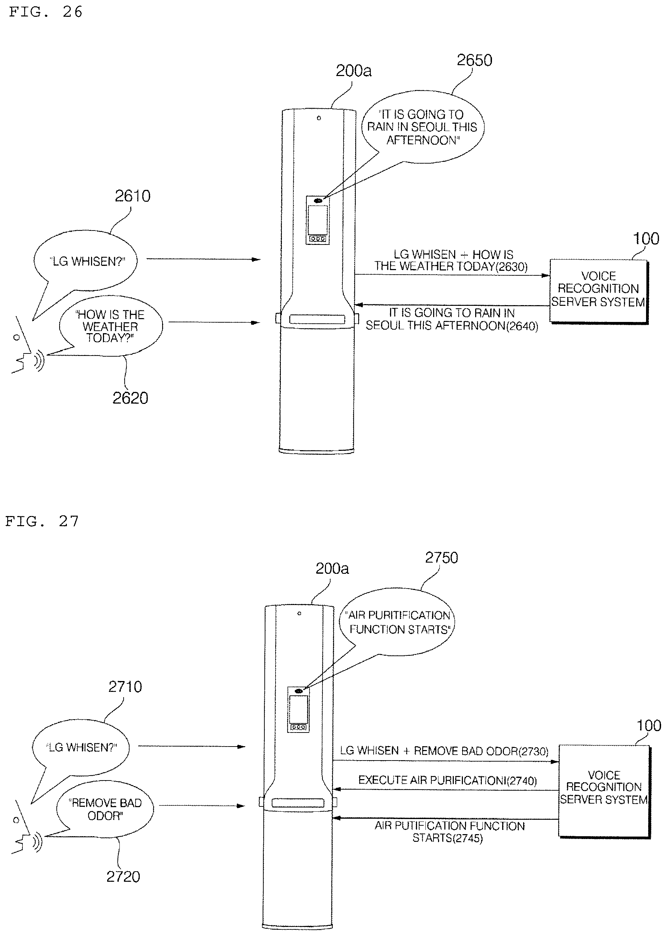

FIGS. 26 to 28 are illustrations for explaining various operations of a voice recognition server system and a home appliance according to an embodiment of the present invention.

Referring to FIG. 26, as a user utters a preset call word 2610, for example, "LG Whisen", the air conditioner 200a may enter a call word standby mode while storing the call word 2610.

In the command standby mode, the user may input a voice command 2620 in the form of a natural language, for example, "How is the weather today?", to the air conditioner 200a. Having received the user's voice command 2620 via the microphone 221 or 222, the air conditioner 200a may transmit voice data 2630, which is a combination of the recorded call word 2610 and the voice command 2620, to the voice recognition server system 100.

After separating the command from the received voice command 2630, the voice recognition server system 100 may analyze the command to determine the intent of the user who wants weather information. Accordingly, the voice recognition server system 100 may access an external service or an internet network, which provides weather information, to request and receive the weather information.

In addition, the voice recognition server system 100 may transmit data based on the received weather information to the home appliance 200a.

Based on the received data, the air conditioner 200a may output an audible guidance message 2650 including weather information, for example, "It is going to rain in Seoul this afternoon."

Referring to FIG. 27, as a user utters a preset call word 2710, for example, "LG Whisen", the air conditioner 200a may enter a command standby mode while storing the call word 2710.

Next, the user may input a voice command 2720 in the form of a natural language "Remove bad odor." Having received the user's voice command 2720 via the microphone 221 or 222, the air conditioner 200a may transmit a voice command 2730, which is a combination of the recorded call word 2710 and the voice command 2720, to the voice recognition server system 100.

After separating a command from the received voice command 2730, the voice recognition server system 100 may analyze the command to determine the intent of the user who wishes an air purification function. Accordingly, the voice recognition server system 100 may transmit a control signal 2740 for executing the air purification function and a response signal 2745 corresponding to the corresponding operation to the air conditioner 200a.

The air conditioner 200a may execute the air purification function and output an audible guidance message 2750 such as "Air purification function starts."

Referring to FIG. 28, as a user utters a preset call word 2810, for example, "LG Whisen", the air conditioner 200a may enter a command standby mode while storing the call word 2810.

Next, the user may input a voice command 2820 in the form of a natural language, for example, "Turn on energy saving function." Having received the user's voice command 2820 via the microphone 221 or 222, the air conditioner 200a may transmit voice command 2830, which is a combination of the recorded call word 2810 and the voice command 2820, to the voice recognition server system 100.

After separating a command from the received voice data 2830, the voice recognition server system 100 may analyze the command to determine the intent of the user who wishes the energy saving function. Accordingly, the voice recognition server system 100 may transmit a control signal 2840 for executing the energy saving function and a response signal 2845 corresponding to a corresponding operation to the air conditioner 200a.

The air conditioner 200a may execute the energy saving mode and output an audible guidance message 2850, such as "Energy saving function starts."

FIG. 29 is a block diagram illustrating another example of a home appliance according to an embodiment of the present invention.

Referring to FIG. 29, the home appliance 200 may include: a camera 210; an audio input unit 220 configured to receive a user's voice command; a manipulation unit 230; a memory 250 configured to store various data; a communication unit 270 configured to communicate with another electronic device; a driving unit 280 configured to perform an operation implemented in each home appliance; a display 292 configured to display specific information in the form of an image; an audio output unit 291 configured to output specific information in the form of sound; a controller 240 configured to control overall operations; and a processor 260.

The internal block diagram of the home appliance 200 shown in FIG. 20 is similar to the example of FIG. 22. However, the home appliance 200 further includes the processor 260, and the audio input unit 220, the audio output unit 291, the communication unit 270, the camera 210, and the processor 260 are provided in a voice recognition module 205 which is a single module.

Meanwhile, the processor 260 may control the audio input unit 220, the audio output unit 291, the communication unit 270, the camera 210, etc.

Hereinafter, the differences from the home appliance shown in FIG. 11 will be mainly described.

The processor 260 may process a user's voice input signal received via the audio input unit 220, and perform a voice recognition process.

For example, when a wake-up voice signal including a preset call word is received, the processor 260 may be switch into a state for receiving a voice command. In this case, the processor 260 performs a voice recognition process of up to receiving a call word voice, and following steps for voice recognition on the user's voice input may be performed by the voice recognition server system 100.

The processor 260 may perform a control operation to transmit the user's voice command, which is received after recognition of the wake-up voice signal, to the voice recognition server system 100 via the communication unit 270.

In addition, the processor 260 may transmit state information of the home appliance 200, the user's voice command, etc. to the voice recognition server system 100 via the communication unit 270.

Meanwhile, when a control signal is received via the communication unit 270, the processor 260 may transmit the control signal to the controller 240 and the controller 240 may control the home appliance 200 to operate in accordance with the received control signal.

As a result, it is possible to acquire voice data, communicate with the server system, and output corresponding sound using the voice recognition module 205.

Meanwhile, the voice recognition module 205 may be attached to any of various electronic devices, apart from the home appliance shown in FIG. 2. Alternatively, the voice recognition module 205 may be used as an additional device not attached to another electronic device.

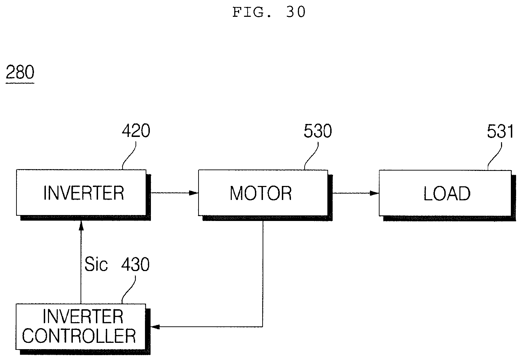

FIG. 30 is an internal block diagram of the driving unit shown in FIGS. 11 and 29.

Meanwhile, the driving unit 280 described with reference to FIG. 11 or 29 may include a motor driving unit, and the driving unit 280 may be hereinafter referred to as a motor driving device.

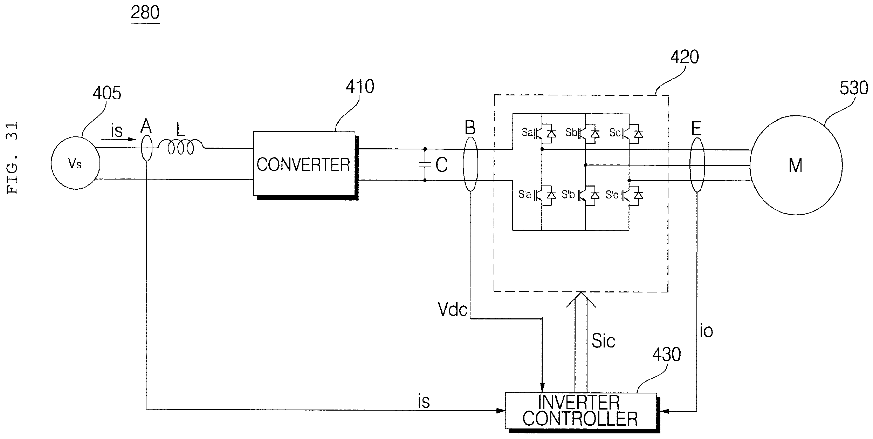

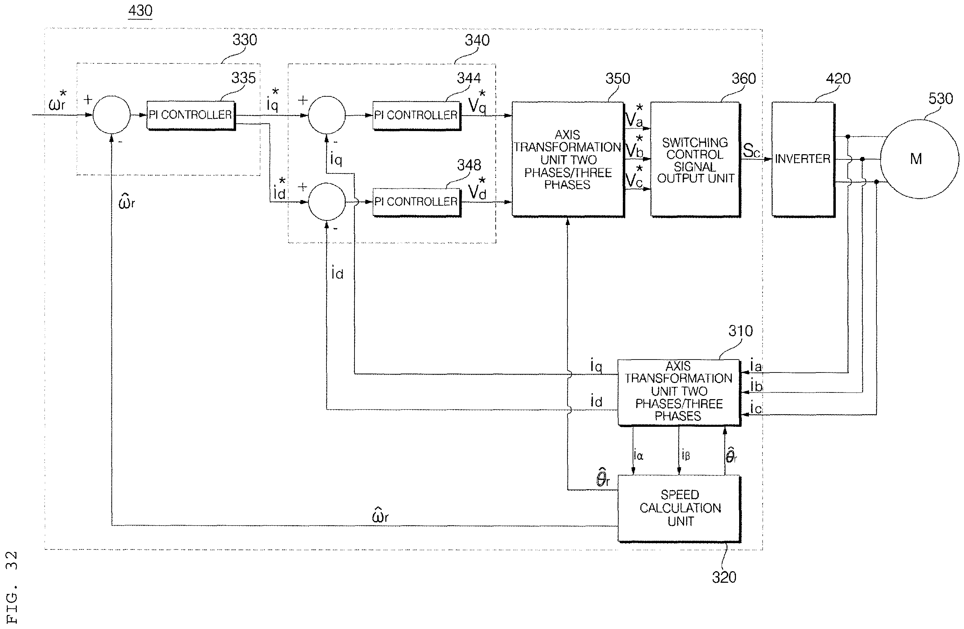

FIG. 31 is an example of an internal circuit example of a motor driving device shown in FIG. 29, and FIG. 32 is an internal block diagram of an inverter controller shown in FIG. 31.

Referring to the drawings, the motor driving device 280 according to an embodiment of the present invention is used to drive a motor in a sensorless method, and the motor driving device 280 may include an inverter 420 and the inverter controller 430.

In addition, the motor driving device 280 according to an embodiment of the present invention may further include a converter 410, a DC terminal voltage detector B, a smoothing capacitor C, and an output current detector E. The driver 280 may further include an input current detector A and a reactor L.

Hereinafter, each unit of the motor driving device 280 shown in FIGS. 30 and 31 will be described.

The reactor L is provided between a commercial AC power supply 405 Vs and the converter 410 and performs power factor correction and voltage boosting. In addition, the reactor L may execute a function of limiting harmonic current according to fast switching of the converter 401.

The input current detector A may detect input current is supplied from the commercial AC power supply 405. For example, a current transformer (CT), shunt resistor and the like may be used as the input current detector A. The detected input current is a discrete signal in a pulse form and may be applied to the inverter controller 430.

The converter 410 converts a commercial AC voltage, which is supplied from the commercial AC power supply 405 and passes through the reactor L, into a DC voltage. While the commercial AC power supply 405 is shown as a single-phase AC power supply in the drawing, the commercial AC power supply may be a three-phase AC power supply. The internal configuration of the converter 410 depends on the type of the commercial AC power supply 405.

Meanwhile, the converter 410 may be configured in the form of a diode without a switching element so as to perform a rectification operation without a switching operation.

For example, four diodes in a bridge form may be used for the single-phase AC power supply and six diodes in a bridge form can be used for the three-phase AC power supply.

Meanwhile, a half bridge type converter having two switching elements and four diodes may be used as the converter 410. In the case of the three-phase AC power supply, six switching elements and six diodes may be used.

When the converter 410 includes switching elements, voltage boosting operation, power factor improvement and DC voltage conversion can be performed according to switching operations of the switching elements.

The smoothing capacitor C may be referred to as a DC terminal capacitor, and the smoothing capacitor C smoothes and stores the voltage input thereto. Although one element is shown as the smoothing capacitor C in the drawing, a plurality of elements may be provided to secure element stability.

Meanwhile, although the smoothing capacitor C is shown as being connected to the output terminal of the converter 410 in the drawing, the present disclosure is not limited thereto and a DC voltage may be directly input to the smoothing capacitor C. For example, a DC voltage from a solar cell can be directly input to the smoothing capacitor C or converted into a DC voltage and applied to the smoothing capacitor C. The following description is based on the part illustrated in the drawing.

Because the DC voltage is applied across both terminals of the smoothing capacitor C, the terminals may be referred to as DC terminals or DC link terminals.

The DC terminal voltage detector B may detect a DC terminal voltage Vdc applied across both terminals of the smoothing capacitor C. The DC terminal voltage detector B may include a resistor, an amplifier and the like. The detected DC terminal voltage Vdc is a discrete signal in a pulse form and may be applied to the inverter controller 430.

The inverter 420 may include a plurality of inverter switching elements, convert a DC voltage Vdc smoothed by on/off operations of the switching elements into three-phase AC voltages Va, Vb and Vc at predetermined frequencies and output the three-phase AC voltages to a three-phase synchronous motor 230.

The inverter 420 is constructed in such a manner that serially connected upper switching elements Sa, Sb and Sc and serially connected lower switching elements S'a, S'b and S'c are respectively paired such that three pairs of upper and lower switching elements Sa&S'a, Sb&S'b and Sc&S'c are connected in parallel.

In addition, diodes are connected in reverse parallel with the switching elements Sa, S'a, Sb, S'b, Sc and S'c.

The switching elements included in the inverter 420 are switched on/off based on an inverter switching control signal Sic from the inverter controller 430. Accordingly, the three-phase AC voltages having predetermined frequencies are output to the three-phase synchronous motor 230.

The inverter controller 430 may control switching operation of the inverter 420 sensorlessly. To this end, the inverter controller 430 may receive an output current io detected by the output current detector E.

The inverter controller 430 outputs the inverter switching control signal Sic to the inverter 420 in order to control switching operation of the inverter 420. The inverter switching control signal Sic is a pulse width modulation (PWM) switching control signal and is generated on the basis of the output current io detected by the output current detector E. Outputting of the inverter switching control signal Sic of the inverter controller 430 will be described in detail with reference to FIG. 32.

The output current detector E detects the output current io flowing between the inverter 420 and the three-phase synchronous motor 230. The output current detector E detects current flowing through the motor 230. The output current detector E may detect output currents ia, ib and ic of three phases or detect output currents of two phases using three phase equilibrium.

The output current detector E may be provided between the inverter 420 and the motor 230, and a current transformer (CT), a shunt resistor and the like may be used to detect a current.

When the shunt resistor is used, three shunt resistors may be provided between the inverter 420 and the synchronous motor 230 or one terminal of each shunt resistor may be connected to each of the three lower switching elements S'a, S'b and S'c of the inverter 420. Meanwhile, two shunt resistors may be employed using three phase equilibrium.

Meanwhile, when one shunt resistor is used, the shunt resistor may be provided between the capacitor C and the inverter 420.

The detected output current io is a discrete signal in a pulse form and may be applied to the inverter controller 430. The inverter switching control signal Sic is generated on the basis of the detected output current io. The output currents ia, ib and ic of three phases are collectively referred to as the detected output current io.

The three-phase motor 230 includes a stator and a rotor. An AC voltage of each phase at a predetermined frequency is applied to a coil of the stator of each phase a, b or c such that the rotor rotates.

For example, the motor 230 may include a surface-mounted permanent-magnet synchronous motor (SMPMSM), an interior permanent magnet synchronous motor (IPMSM), a synchronous reluctance motor (Synrm) and the like. The SMPMSM and IPMSM are permanent magnet synchronous motors (PMSMs) employing a permanent magnet and the Synrm has no permanent magnet.

Referring to FIG. 32, the inverter controller 430 may include an axis transformation unit 310, a speed calculation unit 320, a current command generator 330, a voltage command generator 340, an axis transformation unit 350, a switching control signal output unit 360.

The axis transformation unit 310 receives the output currents ia, ib and ic of three phases, detected by the output current detector E, and converts the output currents ia, ib and ic of three phases into two-phase currents iα and iβ in a stationary reference frame.

Meanwhile, the axis transformation unit 310 may convert the two-phase currents iα and iβ in the stationary reference frame into two-phase currents iα and iβ in a rotating reference frame.

The speed calculation unit 320 may output a calculated position *θ̂ᵣ* and a calculated speed ω̂*ᵣ* on the basis of the two-phase currents iα and iβ in the stationary reference frame, converted by the axis transformation unit 310.

The current command generator 330 generates a current command value i*q on the basis of the calculated speed ω̂*ᵣ* and a speed command value ω*r. For example, the current command generator 330 can perform PI control in a PI controller 335 on the basis of a difference between the calculated speed ω̂*ᵣ* and the speed command value ω*r to generate the current command value i*q. Although the q-axis current command value i*q is exemplified as the current command value in the drawing, a d-axis current command value i*d may be generated along with the q-axis current command value i*q. The d-axis current command value i*d may be set to 0.

The current command generator 330 may further include a limiter that limits the level of the current command value i*q such that the level does not exceed an allowable range.

The voltage command generator 340 generates d-axis and q-axis voltage command values v*d and v*q on the basis of the d-axis and q-axis currents id and iq, which are transformed into the two-phase rotating reference frame by the axis transformation unit, and the current command values i*d and i*q generated by the current command generator 330. For example, the voltage command generator 340 can perform PI control in a PI controller 344 on the basis of a difference between the q-axis current iq and the q-axis current command value i*q and generate the q-axis voltage command value v*q. In addition, the voltage command generator 340 may perform PI control in a PI controller 348 on the basis of a difference between the d-axis current id and the d-axis current command value i*d and generate the d-axis voltage command value v*d. The voltage command generator 340 may further include a limiter (not shown) that limits the levels of the d-axis and a-axis voltage command values v*d and v*q such that the levels do not exceed allowable ranges.

Meanwhile, the generated d-axis and q-axis voltage command values (v*d, v*q) are applied to the axis transformation unit 350.

The axis transformation unit 350 receives the position *θ̂ᵣ* calculated in the speed calculation unit 320 and the d-axis and q-axis voltage command values v*d and v*q and performs axis transformation.

The axis transformation unit 350 transforms the two-phase rotating reference frame into a two-phase stationary reference frame. The position *θ̂ᵣ* calculated in the speed calculation unit 320 may be used.

In addition, the axis transformation unit 350 transforms the two-phase stationary reference frame into a three-phase stationary reference frame. The axis transformation unit 350 outputs three-phase output voltage command values v*a, v*b, and v*c through such transformation.

The switching control signal output unit 360 generates the PWM inverter switching control signal Sic on the basis of the three-phase output voltage command values v*a, v*b and v*c.

The inverter switching control signal Sic output from the switching control signal output unit 360 can be converted into a gate driving signal in a gate driver and applied to a gate of each switching element included in the inverter 420. Accordingly, the switching elements Sa, S'a, Sb, S'b, Sc and S'c in the inverter 420 perform switching operations.

According to at least one of the embodiments of the present invention, a home appliance operates in accordance with a voice input so that a user does not need to manipulate a remote controller, thereby improving user convenience.

In addition, according to at least one of the embodiments of the present invention, a natural language may be recognized and processed efficiently.

Furthermore, according to at least one of the embodiments of the present invention, the probability of false recognition occurring during a voice recognition process and a home appliance control process may be minimized, thereby minimizing user inconvenience and improving reliability.

The voice server, the voice recognition server system, and the home appliance according to the present invention are not limited to the configurations and methods of the above embodiments, and the embodiments may vary as all or some of the embodiments are selectively combined.

The method for operating a voice server, a voice recognition server system, and a home appliance according to the present invention may be implemented as code that can be written on a computer-readable medium in which a program is recorded and thus read by a computer. The computer-readable medium includes all kinds of recording devices in which data is stored in a computer-readable manner. Examples of the computer-readable recording medium may include a hard disk drive (HDD), a solid state disk (SSD), a silicon disk drive (SDD), a read only memory (ROM), a random access memory (RAM), a compact disk read only memory (CD-ROM), a magnetic tape, a floppy disc, and an optical data storage device. In addition, the computer-readable medium may be implemented as a carrier wave, such as data transmission over the Internet. The computer-readable recording medium can be distributed over a plurality of computer systems connected to a network so that computer-readable code is written thereto and executed therefrom in a decentralized manner.

## Claims

1. A method for voice recognition to be used in a home appliance (200), comprising:
activating a voice recognition function;
entering a wake-up signal standby mode for receiving a wake-up voice signal comprising a preset call word;
receiving the wake-up voice signal via an audio input unit (220) comprising at least one microphone (221, 222);
entering a command standby mode for receiving a user's voice command within a preset period of time;
receiving a voice command via the audio input unit (220);
performing a feedback operation corresponding to the reception of the voice command when the voice command is received within the preset period of time;
transmitting voice data, which comprises the voice command received within the preset period of time and the call word, to a voice recognition server system (100);
receiving a response signal based on the voice command from the voice recognition server system (100); and
outputting an audible guidance message included in the received response signal,
wherein the feedback operation is an operation in which at least one vane performs at least one of lifting, moving, rotating, or swing , the home appliance (200) being an air conditioner (200a) having the at least one vane (261R, 261L, 261U, 261D).

2. The method according to claim 1, further comprising storing the call word.

3. The method according to claim 1 or 2, further comprising, when the voice command is not received within the preset period of time, switching to the wake-up signal standby mode.

4. The method according to any one of claims 1 to 3, further comprising, when a control signal based on the voice command is received from the voice recognition server system (100), operating in response to the received a control signal.

5. The method according to claim 4, wherein the receiving the response signal comprises receiving the audible guidance message in a streaming manner from the voice recognition server system (100), and
wherein the outputting the audible guidance message comprises outputting the audible guidance message received in the streaming manner.

6. The method according to claim 4 or 5, further comprising:
when the response signal does not comprise the audible guidance message, requesting voice data including the audible guidance message from the voice recognition server system (100); and
receiving the voice data including the audible guidance message from the voice recognition server system (100).

## Patentansprüche

1. In einem Haushaltsgerät (200) zu verwendendes Verfahren zur Spracherkennung, aufweisend:
Aktivieren einer Spracherkennungsfunktion;
Eintreten in einen Aufwachsignal-Bereitschaftsmodus zum Empfangen eines Aufwachsprachsignals, das ein vorab festgesetztes Rufwort aufweist;
Empfangen des Aufwachsprachsignals über eine Audioeingabeeinheit (220), die mindestens ein Mikrofon (221, 222) aufweist;
Eintreten in einen Befehl-Bereitschaftsmodus zum Empfangen eines Sprachbefehls eines Benutzers innerhalb einer vorgegebenen Zeitdauer;
Empfangen eines Sprachbefehls über die Audioeingabeeinheit (220);
Durchführen eines dem Empfang des Sprachbefehls entsprechenden Rückmeldevorgangs, wenn der Sprachbefehl innerhalb der vorgegebenen Zeitdauer empfangen wird;
Senden von Sprachdaten, die den innerhalb der vorgegebenen Zeitdauer empfangenen Sprachbefehl und das Rufwort aufweisen, zu einem Spracherkennungs-Serversystem (100);
Empfangen eines auf dem Sprachbefehl basierenden Antwortsignals aus dem Spracherkennung-Serversystem (100); und
Ausgeben einer hörbaren Anleitungsmeldung, die in dem empfangenen Antwortsignal enthalten ist,
wobei der Rückmeldevorgang ein Vorgang ist, in dem mindestens ein Flügel eine Hebung und/oder Bewegung und/oder Drehung und/oder Schwenkung durchführt, wobei das Haushaltsgerät (200) eine Klimaanlage (200a) ist, die den mindestens einen Flügel (261R, 261L, 261U, 261D) aufweist.

2. Verfahren nach Anspruch 1, ferner aufweisend Speichern des Rufworts.

3. Verfahren nach Anspruch 1 oder 2, ferner aufweisend: wenn der Sprachbefehl nicht innerhalb der vorgegebenen Zeitdauer empfangen wird, Wechseln in den Aufwachsignal-Bereitschaftsmodus.

4. Verfahren nach einem der Ansprüche 1 bis 3, ferner aufweisend: wenn ein auf dem Sprachbefehl basierendes Steuersignal aus dem Spracherkennungs-Serversystem (100) empfangen wird, tätig werden als Antwort auf das empfangene Steuersignal.

5. Verfahren nach Anspruch 4, wobei das Empfangen des Antwortsignals aufweist:
Empfangen der hörbaren Anleitungsmeldung auf eine Streaming-Weise aus dem Spracherkennungs-Serversystem (100), und
wobei das Ausgeben der hörbaren Anleitungsmeldung aufweist: Ausgeben der auf die Streaming-Weise empfangenen hörbaren Anleitungsmeldung.

6. Verfahren nach Anspruch 4 oder 5, ferner aufweisend:
wenn das Antwortsignal die hörbare Anleitungsmeldung nicht aufweist, Anfordern von Sprachdaten, die die hörbare Anleitungsmeldung aufweisen, aus dem Spracherkennung-Serversystem (100); und
Empfangen der Sprachdaten, die die hörbare Anleitungsmeldung aufweisen, aus dem Spracherkennungs-Serversystem (100).

## Revendications

1. Procédé de reconnaissance vocale à utiliser dans un appareil ménager (200), comprenant :
l'activation d'une fonction de reconnaissance vocale ;
l'entrée d'un mode de veille de signal de réveil pour la réception d'un signal vocal de réveil comprenant un mot d'appel prédéfini ;
la réception du signal vocal de réveil au moyen d'une unité d'entrée audio (220) comprenant au moins un microphone (221, 222) ;
l'entrée d'un mode de veille de commande pour la réception d'une commande vocale d'un utilisateur dans une période de temps prédéfinie ;
la réception d'une commande vocale au moyen de l'unité d'entrée audio (220) ;
la réalisation d'une opération de rétroaction correspondant à la réception de la commande vocale lorsque la commande vocale est reçue dans la période de temps prédéfinie ;
la transmission de données vocales, qui comprend la commande vocale reçue dans la période de temps prédéfinie et le mot d'appel, à un système de serveur de reconnaissance vocale (100) ;
la réception d'un signal de réponse basé sur la commande vocale à partir du système de serveur de reconnaissance vocale (100) ; et
l'émission d'un message de guidage audible inclus dans le signal de réponse reçu,
dans lequel l'opération de rétroaction est une opération dans laquelle au moins une ailette effectue au moins un parmi le levage, le déplacement, la rotation ou l'oscillation, l'appareil ménager (200) étant un conditionneur d'air (200a) ayant l'au moins une ailette (261R, 261L, 261U, 261D).

2. Procédé selon la revendication 1, comprenant en outre le stockage du mot d'appel.

3. Procédé selon la revendication 1 ou 2, comprenant en outre, lorsque la commande vocale n'est pas reçue dans la période de temps prédéfinie, le passage au mode de veille de signal de réveil.

4. Procédé selon l'une quelconque des revendications 1 à 3, comprenant en outre, lorsqu'un signal de commande basé sur la commande vocale est reçu du système de serveur de reconnaissance vocale (100), le fonctionnement en réponse au signal de commande reçu.

5. Procédé selon la revendication 4, dans lequel la réception du signal de réponse comprend la réception du message de guidage audible par diffusion en continu à partir du système de serveur de reconnaissance vocale (100), et
dans lequel l'émission du message de guidage audible comprend l'émission du message de guidage audible reçu par la diffusion en continu.

6. Procédé selon la revendication 4 ou 5, comprenant en outre :
lorsque le signal de réponse ne comprend pas le message de guidage audible, la demande de données vocales incluant le message de guidage audible au système de serveur de reconnaissance vocale (100) ; et
la réception des données vocales incluant le message de guidage audible à partir du système de serveur de reconnaissance vocale (100).
